# EUROPEAN PATENT SPECIFICATION

(11) **EP 1 178 419 B1**
(45) Date of publication and mention of the grant of the patent: **30.09.2009**
(21) Application number: 01117386.1
(22) Date of filing: 18.07.2001
(51) Int. Cl.: G06Q 10/00

(54) **Information management method, navigation apparatus, computer program product and computer readable storage medium**
Verfahren für die Verwaltung und Verarbeitung von Informationen, Navigationsgerät, Computerprogrammprodukt und per Computer lesbares Speichermedium
Méthode de gestion et de traitement d'information, appareil de navigation, produit logiciel et support d'enregistrement lisible par ordinateur

(30) Priority: 21.07.2000 JP 2000221112; 29.09.2000 JP 2000300184
(43) Date of publication of application: 06.02.2002
(73) Proprietor: Mazda Motor Corporation, Aki-gun, Hiroshima 730-8670 (JP)
(72) Inventor: Hirabayashi, Shigefumi, Aki-gun, Hiroshima 730-8670 (JP); Uchida, Norihiko, Aki-gun, Hiroshima 730-8670 (JP)
(74) Representative: Müller-Boré & Partner Patentanwälte

(56) References cited:
- EP-A- 0 795 835
- EP-A- 0 995 973
- US-A- 5 790 974
- US-A- 5 938 721
- TOMOAKI ABE, ET AL.: "Current Status of UTMS' Emergency Call System" [Online] 16 October 1998 (1998-10-16) , UNIVERSAL TRAFFIC MANAGEMENT SOCIETY , SOEUL XP002267969 Retrieved from the Internet: <URL: http://www.utms.or.jp/english/inter/paper/ seoul08.pdf> [retrieved on 2004-01-28] * the whole document *
- PATENT ABSTRACTS OF JAPAN vol. 2000, no. 04, 31 August 2000 (2000-08-31) & JP 2000 029945 A (NEC CORP), 28 January 2000 (2000-01-28)
- PATENT ABSTRACTS OF JAPAN vol. 1997, no. 09, 30 September 1997 (1997-09-30) & JP 09 113599 A (HITACHI LTD), 2 May 1997 (1997-05-02)
- PATENT ABSTRACTS OF JAPAN vol. 1999, no. 08, 30 June 1999 (1999-06-30) & JP 11 086195 A (TOYOTA MOTOR CORP), 30 March 1999 (1999-03-30)
- ANONYMOUS: "Abstract of Papers - 5th Annual World Congress on ITS (1998 in Seoul)" [Online] , UNIVERSAL TRAFFIC MANAGEMENT SOCIETY OF JAPAN , INTERNET DOCUMENT XP002268409 Retrieved from the Internet: <URL: http://www.utms.or.jp/english/inter/ronbun .html> [retrieved on 2004-01-28] & TOMOAKI ABE, ET AL.: "Current Status of UTMS' Emergency Call System" [Online] 16 October 1998 (1998-10-16) , UNIVERSAL TRAFFIC MANAGEMENT SOCIETY OF JAPAN , SEOUL Retrieved from the Internet: <URL: http://www.utms.or.jp/english/inter/paper/ seoul08.pdf> [retrieved on 2004-01-28] XP002267969

## Description

### FIELD OF THE INVENTION

The present invention relates to an information management method of, e.g., a personal schedule using an information processing apparatus, a navigation apparatus, and the like.

### BACKGROUND OF THE INVENTION

In recent years, portable information processing apparatuses (PDA) have prevailed. As an example of such apparatus, for example, Japanese Patent Laid-Open No. 9-113599 discloses a technique in which a position measurement sensor is mounted on a portable information terminal, and schedule information corresponding to position information detected by that sensor is informed at the information terminal.

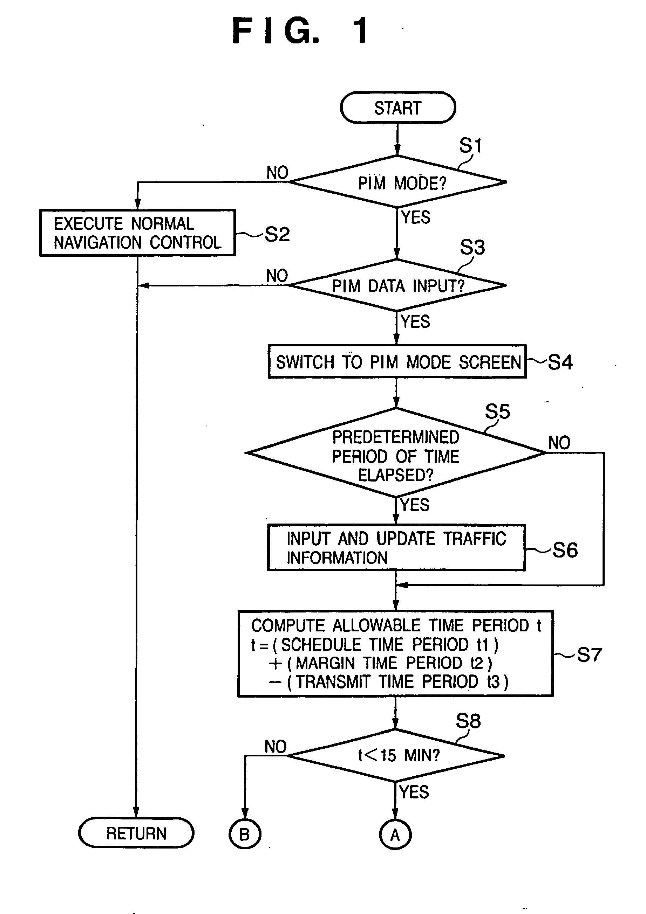

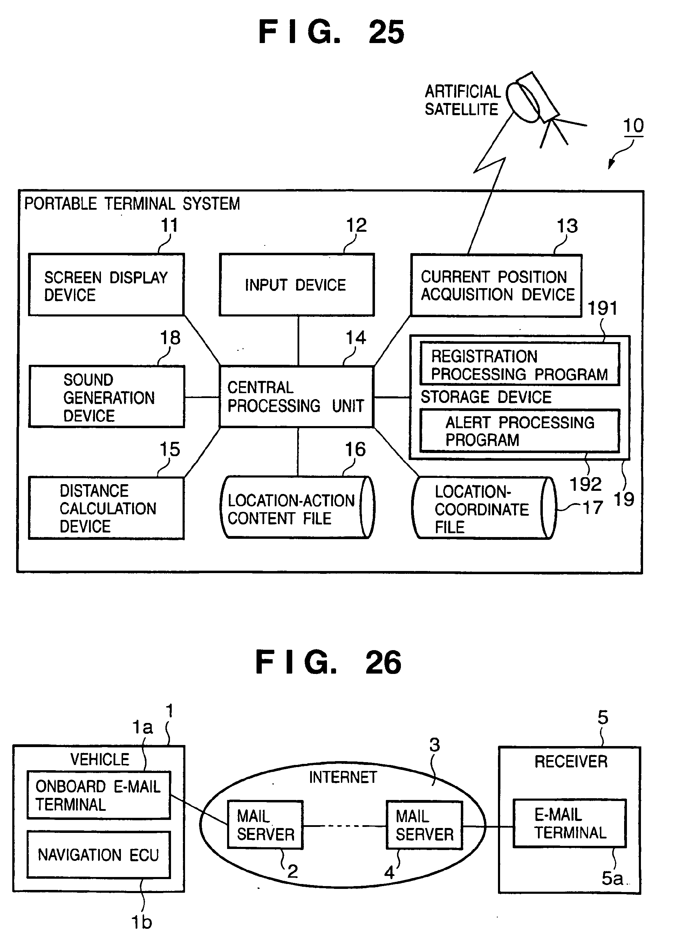

That is, as shown in Fig. 25 corresponding to Fig. 1 of Japanese Patent Laid-Open No. 9-113599, a data file 16 of a portable terminal system (PDA) 10 registers in advance actions to be taken by the user for respective locations where those actions are to be taken, by user's input operations. When the current position detected by a current position acquisition device 13 approaches a location registered in the data file 16, or when the current position disappears from the registered location, the portable terminal system 10 informs the user of the action to be taken at that location.

According to the above prior art, schedule information corresponding to the current position can be acquired by simple operation, thus improving the convenience. That is, in the portable terminal system 10, since user's schedule is managed for respective locations, the user can easily check if he or she has a business scheduled to be taken care of, when the user actually visits that location.

However, the user must frequently input a schedule of events (e.g., meeting or the like) to enjoy such convenience every time a new event is scheduled, and the load on the user is heavy upon inputting various kinds of schedule information at the portable information terminal having a considerably small housing. In mobile bodies such as a vehicle and the like, information processing apparatuses such as a navigation apparatus and the like are increasingly mounted, and Japanese Patent Laid-Open No. 11-86195 proposes a technique in which a navigation apparatus for, e.g., guiding a route to a target place, and an e-mail terminal are mounted on a vehicle, position information of that vehicle is sent to an external mail server, and an e-mail message is received from the external mail server.

That is, as shown in Fig. 26 corresponding to Fig. 1 of Japanese Patent Laid-Open No. 11-86195, a vehicle 1 mounts an e-mail terminal 1a and navigation ECU 1b The e-mail terminal 1a can communicate with a mail server 2 which can establish connection to an Internet 3. The e-mail terminal 1a generates an outgoing message on the basis of position information of the vehicle 1 detected by the navigation ECU 1b, and automatically sends the generated message to the mail server 2 as an e-mail message. In the above patent application, a message to be sent has a text format, and contents, e.g., "current location at ○○ : × × is near Δ Δ Δ ". According to this technique, the user who is on the move using a vehicle can automatically inform a desired partner of the current location of himself or herself (vehicle 1) by setting a destination of an e-mail message, resulting in convenience.

However, the user can automatically inform a partner of only his or her location (the current position of the vehicle 1) using the e-mail terminal 1a and navigation ECU 1b, and must make input operations by himself or herself to send a message with other contents. In this case, since the e-mail terminal 1a that can be mounted on the vehicle 1 has a keyboard or the like having a small housing, it is not easy to make input operation in a small car cabin.

It is convenient for persons such as sales persons who transit to various locations using vehicles to acquire personal schedule data from an apparatus outside the vehicle in terms of easy schedule management and the like. In such case, the user who is, e.g., a sales person, sets and stores in advance places and the like he or she wants to visit as personal schedule data in a server of his or her office, and can acquire the next place he or she must visit from the server outside the vehicle via a radio communication or the like. Upon completion of a scheduled event (e.g., meeting) at a given place, the user inputs the result in the vehicle, and sends the input information to the server, thus automatically updating the personal schedule data.

When a sales person visits a given company for meeting, he or she may receive an order of articles or may be required to offer estimates or to be joined by a specific person to the next meeting at the visiting place. Upon receiving such requirement, the sales person temporarily stores the required contents, i.e., the order contents in the information processing apparatus of the vehicle, and separately proceeds with the order placed for an order placement department on the basis of the stored contents when he or she goes back to the office. However, it is very troublesome to separately take such order placement procedure, and it may retard the order placement procedure.

US 5 938 721 describes a mobile computer system that accesses a database where a task description is stored. The mobile computer system receives positioning information corresponding to its geographic location and indexes the data base based on the positioning information when the information indicated that the mobile computer system is in an geographic location that facilitates completion of a task associated with the task description. The positioning information may be obtained from a GPS satellite and the mobile computer system may be a portable unit, such as a PDA, or integrated within a vehicle.

US 5 790 974 describes a personal calendaring system that includes a portable calendaring system and a complementary office calendar system, each synchronizing calendar entries by two-way wireless transmission, to minimize conflicts between the stored schedule and a schedule request entered at respective locations. In addition, the portable calendaring system includes a GPS receiver interface providing location information. In one aspect it is described that the system stores the current location of the portable calendaring system in a location register and determines whether any change in the current location of the portable calendaring system causes a conflict with the calendar entries stored in a calendar memory. Specifically, the system identifies a next appointment entry based on the system time clock, and calculates an estimated travel time based on the current location stored in the register and the location identified by the next appointment entry. The system then selects a travel time between two locations stored in a digital map database that most closely correspond to the current location of the portable calendar system and the location of the text appointment entry.

### SUMMARY OF THE INVENTION

It is the object of the invention to provide an information management method and a corresponding navigation apparatus, a computer readable storage medium and a program product by which operation is simplified for a user while navigation is improved.

This object is solved by an information management method, a navigation apparatus, a computer readable storage medium, and a program product having the features disclosed in the independent claims. Preferred embodiments are defined in the dependent subclaims.

That is, an information management method using an information processing apparatus, is characterized by comprising the storage step of storing arbitrary information, input at an information processing apparatus (1, 50), which comprises a sensor (3, 52) for detecting a current position, in an external apparatus or the self-apparatus in association with position information (e.g., position information detected by the sensor), the acquisition step of acquiring, in accordance with position information detected by the sensor upon starting up the information processing apparatus, arbitrary information to which that position information or position information corresponding to a position within a predetermined range around a position indicated by that position information is associated by searching the information stored in the storage step, and the informing step of informing a user of contents of the acquired arbitrary information to allow the user to change a setup as new arbitrary information to be stored in the external apparatus or the self-apparatus.

In a preferred embodiment, the storage step may include the step of also storing, upon storing the position information and the arbitrary information in association with each other, time information of a current time in association with and in addition to the position information and the arbitrary information, and the acquisition step may include the step of not acquiring arbitrary information to which time information dating back the current time a predetermined period of time is associated upon acquiring arbitrary information stored in the storage step at the beginning of movement of the information processing apparatus.

In order to achieve the first object, an information processing apparatus (e.g., a PDA) according to the present invention is characterized by the following arrangement.

That is, an information processing apparatus is characterized by comprising position detection means (52) for detecting a current position of the self-apparatus (50), storage means (58) for storing input arbitrary information in an external apparatus (MC) or the self-apparatus in association with position information (e.g., position information detected by the position detection means), and control means (51) for controlling the storage means in accordance with position information detected by the position detection means upon starting up the self-apparatus to acquire arbitrary information to which that position information or position information corresponding to a position within a predetermined range around a position indicated by that position information is associated, and informing a user of contents of the acquired arbitrary information to allow the user to change a setup as new arbitrary information to be stored in the storage means.

Alternatively, in order to achieve the first object, an information processing apparatus to be mounted in a mobile body is characterized by the following arrangement.

That is, an information processing apparatus is characterized by comprising position detection means (3) for detecting a current position of the mobile body on which the self-apparatus (1) is mounted, storage means (17) for storing input arbitrary information in an external apparatus or the self-apparatus in association with position information (e.g., position information detected by the position detection means), and control means (2) for controlling the storage means in accordance with position information detected by the position detection means upon starting the mobile body to acquire arbitrary information to which that position information or position information corresponding to a position within a predetermined range around a position indicated by that position information is associated, and informing a user of contents of the acquired arbitrary information to allow the user to change a setup as new arbitrary information to be stored in the storage means.

In either the information processing apparatus or the information processing apparatus to be mounted in a mobile body with the above arrangement, storage means may store time information of a current time in association with and in addition to the position information and the arbitrary information upon storing the position information and the arbitrary information in association with each other, and the control means may not acquire arbitrary information to which time information dating back the current time a predetermined period of time is associated upon acquiring arbitrary information by controlling the storage means upon starting up the self-apparatus.

The arbitrary information may contain at least a given event and time information associated with the event, and the control means may display the event and the time information associated with the event acquired from the storage means to allow the user to change the setup as new arbitrary information to be stored in the storage means.

The control means may control the storage means in accordance with position information detected by the position detection means upon starting up the self-apparatus (or upon starting the mobile body) to acquire arbitrary information to which that position information or position information corresponding to a position within a predetermined range around a position indicated by that position information is associated, may ask the user if the acquired arbitrary information is processed as old information, and may inform the user of the contents of the acquired arbitrary information to allow the user to change a setup as new arbitrary information to be stored in the storage means.

Alternatively, in order to achieve the first object, an information management apparatus (e.g., a server computer) according to the present invention is characterized by the following arrangement.

That is, an information management apparatus which stores arbitrary information acquired from an external apparatus connected via an electric communication line, and provides the stored arbitrary information to the external apparatus, comprises storage means for storing arbitrary information and position information received from the external apparatus in association with each other, and search means for acquiring, by searching information stored in the storage means in accordance with position information received upon starting up the external apparatus, arbitrary information to which that position information or position information corresponding to a position within a predetermined range around a position indicated by that position information is associated, and sending the acquired arbitrary information to the external apparatus.

In a preferred embodiment, the storage means may store time information of a current time in association with and in addition to the position information and the arbitrary information upon storing the position information and the arbitrary information in association with each other, and the search means may exclude arbitrary information to which time information dating back the current time a predetermined period of time is associated from information to be searched upon searching arbitrary information in accordance with the position information received upon starting up the external apparatus.

Furthermore, the first object is also achieved by a program code (program product) that allows a computer to implement the information processing apparatus, the information processing apparatus to be mounted in a mobile body, or the information management apparatus, and a computer readable storage medium that stores the program code.

In order to achieve the second object, an information processing apparatus (information center) according to the present invention is premised on that it sends pre-stored personal schedule information to a mobile body such as a vehicle or the like, and when an order for a desired object is input at the mobile body side, the input order is externally placed in association with the current position of the mobile body.

The current position of the mobile body can be detected by, e.g., position detection means equipped in the mobile body.

When personal schedule information pre-stored in the information center that executes an order placement process contains position data, the information center can execute the order placement process while associating the current position of the mobile body received from the mobile body with the personal schedule data.

The present invention can be recognized not only as an information processing apparatus but also as an information processing method that serves as a control scheme in the control means. Also, the present invention can be recognized as a storage medium that stores a computer control program which implements the information processing method.

Furthermore, the present invention can be recognized as an information processing apparatus on the mobile body side that inputs and sends an object on order, and the mobile body has detection means of the current position, input means for inputting the object on order, and sending the object on order.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate the first embodiment and further examples of the invention and, together with the description, serve to explain the principles of the invention.
Fig. 1 is a flow chart showing the former half of a signal process executed for navigation control by a CPU of an onboard navigation apparatus;
Fig. 2 is a flow chart showing the latter half of the signal process executed for navigation control;
Fig. 3 is a flow chart showing a signal process of an automatic check subroutine for automatically checking execution of PIM data;
Fig. 4 shows a PIM mode screen displayed on a display;
Fig. 5 is a block diagram showing the arrangement of an onboard navigation apparatus 1;
Fig. 6 is a block diagram showing the arrangement of a PC 20;
Fig. 7 is a block diagram showing the arrangement of an information center;
Fig. 8 is a diagram showing the overall arrangement of an information processing apparatus for a mobile body according to the first example ;
Figs. 9A and 9B show examples of display screen images in the second example first embodiment;
Figs. 10A and 10B are flow charts of a control process of an information terminal 50 in the second example;
Figs. 11A and 11B are flow charts of a control process of a navigation apparatus 1 in the first embodiment;
Fig. 12 is a block diagram showing the arrangement of the information terminal 50;
Fig. 13 is a diagram showing the overall system of the third example ;
Fig. 14 is a block diagram showing an example of a system constructed by a navigation apparatus and management apparatus (information center) in the third example;
Fig. 15 shows the interior of a driver room of a vehicle on which the navigation apparatus in the third example is mounted;
Fig. 16 shows an example of personal schedule data (PIM data) in the third example;
Fig. 17 shows a display example on a display screen of the vehicle in association with personal schedule data in the third example ;
Fig. 18 shows an order placement process from the vehicle to an order placement apparatus in the third example;
Fig. 19 is a flow chart showing a control process executed by the navigation apparatus in the third example ;
Fig. 20 is a flow chart showing a control process executed by the navigation apparatus in the third example ;
Fig. 21 is a flow chart showing a control process executed by the management apparatus in the third example ;
Fig. 22 is a flow chart showing a control process in a portable information processing apparatus (PDA) in the third example ;
Fig. 23 is a flow chart showing another control process in the portable information processing apparatus (PDA) in the third example ;
Fig. 24 is a flow chart showing route navigation using personal schedule data in the third example ;
Fig. 25 is a block diagram showing Fig. 1 of Japanese Patent Laid-Open No. 9-113599; and
Fig. 26 is a block diagram showing Fig. 1 of Japanese Patent Laid-Open No. 11-86195.

### DETAILED DESCRIPTION OF THE PREFERRED EMBODIMENT

The preferred embodiment and further examples of the present invention will now be described in detail in accordance with the accompanying drawings.

An embodiment in which the present invention is applied to an automobile as a typical mobile body will be described in detail hereinafter with reference to the accompanying drawings.

### [First Example]

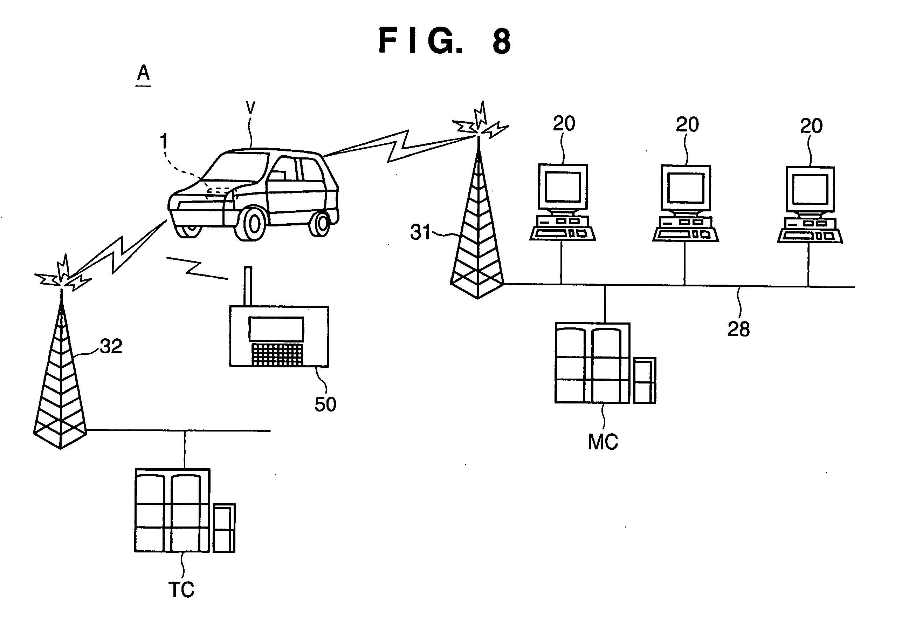

Fig. 8 shows the overall arrangement of an information processing apparatus A for a mobile body according to the first example.

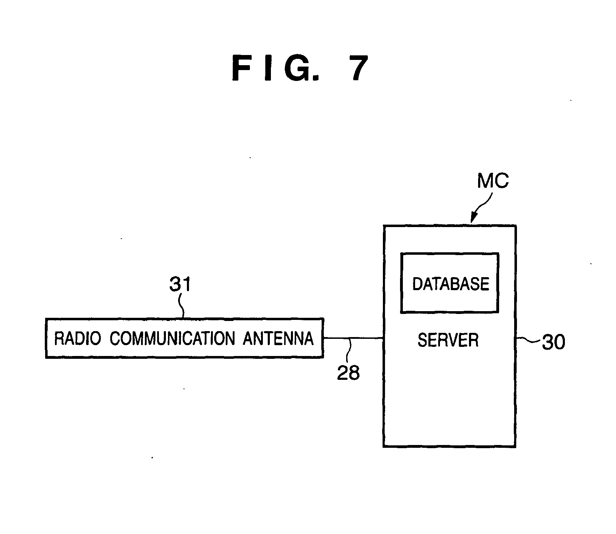

Referring to Fig. 8, the information processing apparatus A for a mobile body comprises a navigation apparatus 1 (navigation means) mounted on a vehicle V. The navigation apparatus 1 can exchange data with a personal computer (to be referred to as a PC hereinafter) 20 of the user (individual), a server computer (to be referred to as a server hereinafter) 30 (see Fig. 7) equipped in a dedicated information center MC that provides various kinds of information, and a server (not shown) equipped in a traffic information center TC that provides traffic information.

An information terminal 50 is a portable information processing apparatus (so-called PDA) of the user, and can implement the same function as the PC 20 (to be described later) by a radio communication function.

More specifically, the information center MC and PC 20 are connected via a communication line 28 such as a telephone line or the like. A radio communication antenna 31 is connected to this communication line 28, and the PC 20, information center MC, and onboard navigation apparatus 1 exchange signals by radio via the radio communication antenna 31.

On the other hand, a radio communication antenna 32 is connected to the traffic information center TC, and the traffic information center TC and navigation apparatus 1 exchange signals by radio via the radio communication antenna 32, thus transmitting traffic information from the traffic information center TC to the navigation apparatus 1.

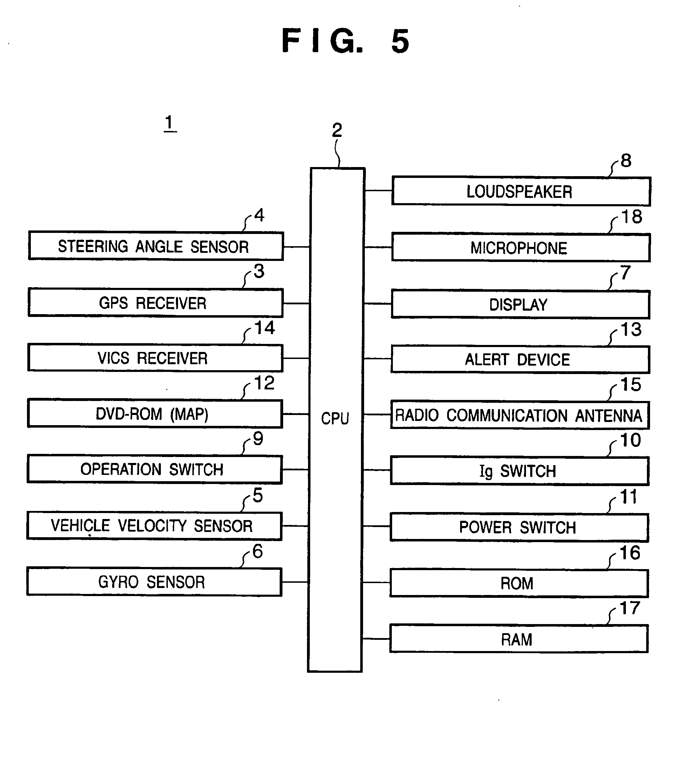

As shown in Fig. 5, the navigation apparatus 1 comprises a CPU 2 for executing control processes of various signals.

To this CPU 2, at least
- a GPS receiver 3 for receiving a GPS signal from a GPS satellite,
- a steering angle sensor 4 for detecting the steering angle of the steering wheel of the vehicle V,
- a vehicle velocity sensor 5 for detecting the travel velocity of the vehicle V,
- a gyro sensor 6 for detecting the direction of the vehicle V,
- a display 7 for displaying various kinds of information on its screen,
- a loudspeaker 8 for audibly informing various kinds of information, music, and the like,
- operation switches 9 including a joystick switch, trackball switch, or the like used to select an icon displayed on the display screen of the display 7,
- an ignition (IG) switch 10 used to start the vehicle V,
- a power switch 11 for turning on/off a power supply of the navigation apparatus 1,
- a DVD-ROM drive 12 for driving a DVD-ROM that stores a map,
- an alert device 13 for generating various alerts,
- a VICS receiver 14 for receiving traffic information from the traffic information server TC,
- a communication antenna 15 for exchanging data signals with the communication antenna 31 connected to the server 30 of the information center MC and the PC 20,
- a ROM 16 for storing a PIM (Personal Information Manager) program, navigation program, and the like,
- a nonvolatile RAM 17 for storing various data, and
- a microphone 18 for inputting information by voice
   are connected to be able to exchange signals with each other.

As an alert pattern of the alert device 13, when the navigation apparatus 1 navigates a transit route of the user's vehicle V on the basis of PIM data and traffic information, and it is projected during travel of the vehicle V that the vehicle V cannot arrive at the scheduled location until the scheduled time, the alert device 13 alerts the user (a driver of the vehicle V) to that fact.

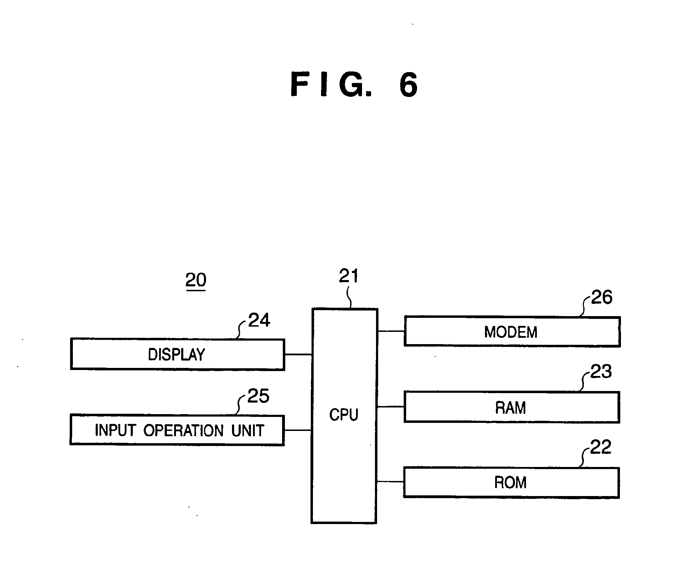

On the other hand, as shown in Fig. 6, the PC 20 comprises a CPU 21 for executing control processes of various signals. To this CPU 21, a ROM 22 for storing a PIM program and the like, a RAM 23, a display 24, an operation input unit 25 such as a keyboard, mouse, and the like, and a modem 26 connected to the communication line 28 are connected as in the navigation apparatus 1. The PC 20 receives personal information management data (PIM data) containing position data (more specifically, position coordinate data) and associated time data, and stores the input personal information management data in the RAM 23 (or a storage medium; not shown).

Furthermore, as shown in Fig. 7, the server 30 of the information center MC incorporates a database that stores various kinds of information to be provided.

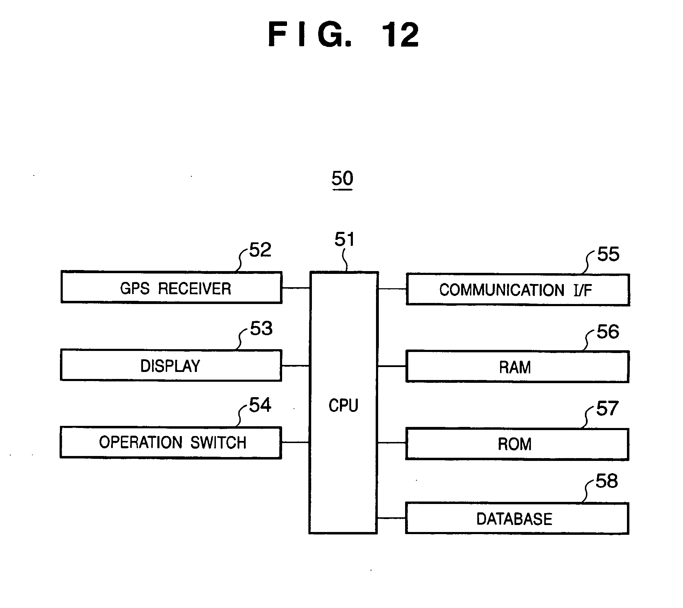

Fig. 12 is a block diagram showing the arrangement of the information terminal 50. The information terminal 50 comprises
- a GPS receiver 52 for detecting the current position of the user who carries the information terminal 50,
- a display 53 for displaying a map image and the like,
- operation switches 54 including a power switch (main switch), various operation keys, and the like,
- a communication interface (I/F) 55 which is connected to a public radiotelephone line, and can at least exchange data,
- a RAM 56 used as a temporary storage area (work area) or the like of various data,
- a ROM 57 that pre-stores a startup program and the like,
- a database (D/B) 58 that stores map information and various data (note that PIM data is stored in the D/B 58 in the second example to be described later), and
- a CPU 51 for controlling the operations of these building components.

Note that the map information stored in the database 58 may be either information received from an external apparatus as needed or information acquired from a detachable storage medium. The information terminal 50 may have a telephone shape which further comprises a microphone and loudspeaker, and has a voice communication function.

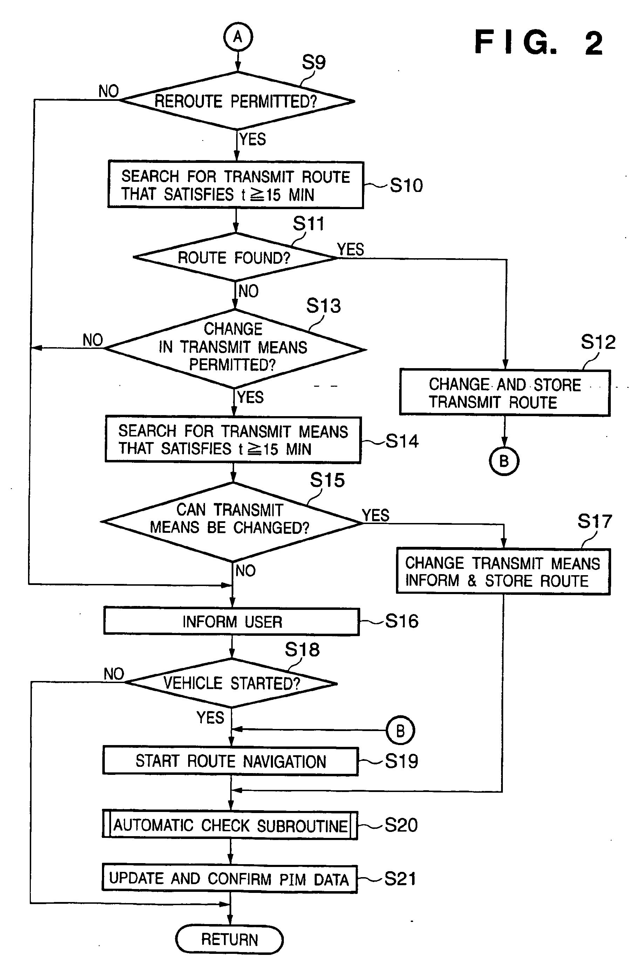

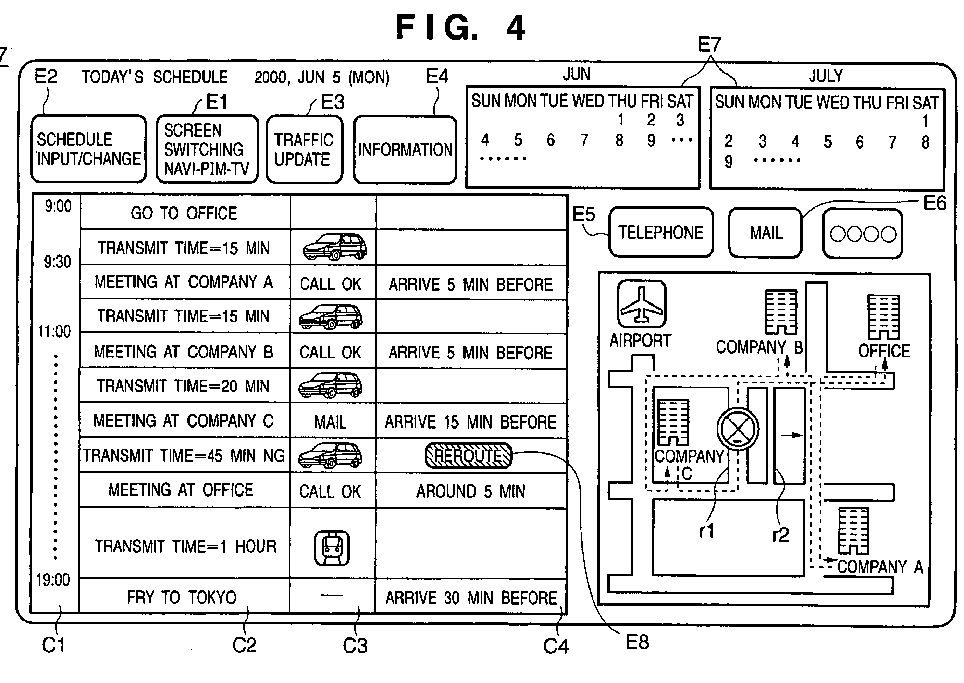

The signal process executed for navigation control by the CPU 2 in the navigation apparatus 1 will be explained below using Figs. 1 and 2. This signal process is executed when a control mode is set in a navigation or PIM mode. The control mode can be set in the navigation or PIM mode by selecting and executing a screen switching icon E1 displayed on the display 7 using the operation switches 9, as shown in Fig. 4.

More specifically, when the screen switching icon E1 displayed on the display 7 is selected and executed using the operation switches 9, a screen displayed on the display 7 is switched to a navigation mode screen, PIM mode screen, or television mode screen. When switching to the PIM mode screen is selected, PIM data associated with the current navigation control is selected, and the selected PIM data is displayed on the screen of the display 7.

It is checked in the first step S1 in the signal process if the PIM mode is selected by the operation switches 9. If NO in step S1, since the navigation mode is set, the flow advances to step S2 to execute normal navigation control, and the flow then returns. That is, in step S2 the display 7 is switched to the navigation mode screen, and a map and the current position of the vehicle V detected on the basis of a GPS signal, vehicle velocity signal, gyro signal, and the like are displayed on the screen, thus navigating the transit route of the vehicle V.

If YES in step S1, since the PIM mode is set, the flow advances to step S3 to check if PIM data is input to the RAM 17 of the navigation apparatus 1 by exchanging signals via a communication with the information center MC (step S3). If NO in step S3, the flow returns. On the other hand, if YES in step S3, the display 7 is switched to the PIM mode screen in step S4.

On the PIM mode screen, as exemplified in Fig. 4, a time field C1, schedule item field C2, transit means field C3, and remark field C4 are displayed as today's schedule in the PIM data. For example, transit time periods t3 are displayed on the scheduled item field C2 in addition to schedule items, a notification mode (to be described later) is displayed on the transit means field C3 in addition to transit means, and arrival states at scheduled locations of arrival and the like are displayed on the remark field C4.

Also, a navigation map associated with the schedule is displayed on the lower right area of the screen.

Furthermore, a schedule input/change icon E2, a traffic update icon E3 used to update traffic information by forcibly receiving it from the traffic information center TC, a display icon E4 used to display various kinds of information, a telephone icon E5 used to make a phone call, a mail icon E6 used to send/receive mail messages, and calendar icons E7 are displayed in addition to the screen switching icon E1.

When the user has made switch operation for selecting and executing the traffic update icon E3, the navigation apparatus 1 forcibly receives traffic information from the traffic information center TC, thereby automatically updating the traffic information.

In the aforementioned schedule, assume that after the user leaves home for his or her office, he or she visits companies A, B, and C in turn using the vehicle V to have meetings, goes back from company C to the office, then goes to an airport by train, and travels to Tokyo by airplane.

After step S4, the flow advances to step S5, and it is checked if an internal timer that repetitively counts a predetermined time period (e.g., 10 min) counts up and the predetermined time period has elapsed. If NO in step S5, the flow advances to step S7; if the predetermined time period has elapsed, i.e., if YES in step S5, traffic information is received from the traffic information center TC to update the old traffic information, and the flow then advances to step S7.

In step S7, an allowable time period t is computed. The allowable time period t indicates a time period left until the scheduled time (e.g., 11 o'clock am) of the meeting when the user transits from the current position to the scheduled location (e.g., company B) in the schedule under the transit condition based on the traffic information. More specifically, the allowable time period t is obtained by adding a margin time period t2 required from a parking to the scheduled location to a scheduled time period t1 required for transition set in the schedule, and subtracting an estimated transit time period t3 calculated based on the traffic information from the total t1 + t2. For example, when the scheduled time period t1 = 30 min, the margin time period t2 = 5 min, and the transit time period t3 = 15 min, the allowable time period t = 20 min (= 30 + 5 - 15). If the transit time period t3 is prolonged to t3 = 25 min due to a traffic jam or the like, the allowable time period t is t = 10 min (= 30 + 5 - 25) (note that the scheduled time period t1 and margin time period t2 are values manually input by the user).

After that, it is checked in step S8 if the calculated allowable time period t is shorter than, e.g., 15 min (which are a generally set reference time period, and are not limited to 15 min, i.e., can be arbitrarily changed). If NO in step S8, i.e., t ≥ 15 min, it is determined that the sufficiently long time period is left before the user transits from the current position to the scheduled location until the scheduled time, and the flow advances to step S18 shown in Fig. 2.

On the contrary, if YES in step S8 (t < 15 min), it is determined that the user may not have an enough time period to arrive the scheduled location at the scheduled time if the user transits from the current position to the scheduled location in accordance with the current transit schedule, and the user may be behind schedule, and steps S9 to S17 in Fig. 2 are executed to take a measure.

That is, it is checked in step S9 if rerouting is permitted. Note that rerouting is to change the transit route of the user using the vehicle V from the initially scheduled one, and when the user selects and executes a rerouting icon E8 displayed in the remark field C4 in the schedule on the PIM mode screen shown in Fig. 4, it is determined that rerouting is permitted.

If NO in step S9 (rerouting is inhibited), the flow jumps to step S16 to report to the user that he or she may be behind schedule at the next scheduled location according to the current transit schedule (note that the user may turn off this report function itself). More specifically, this report is made by a voice call or mail message using a portable phone or the like that the user carries. The voice or mail message to be selected is set in advance by the user. For example, if a voice report may be allowed during a meeting, a voice call is selected; if a voice report is to be avoided, a mail message is selected. The selected means is displayed on the transit means field C3 in the schedule on the PIM mode screen shown in Fig. 4.

If YES in step S9 (rerouting is permitted), a new transit route that has the allowable time period t = 15 min or more is searched for in step S10, and it is checked in step S11 if the corresponding transit route (reroute) is found. For example, as shown in the map on the PIM mode screen shown in Fig. 4, if the traffic information reveals that a road r1 included in the set transit route is closed upon returning from company C to the office, a new transit route is searched to include a road r2 that detours the closed road r1. If YES in step S11 (new transit route is found), the flow advances to step S12 to store that the original transit route has changed to that new transit route, and the flow then advances to step S18. That is, the user receives no report in this case, which is made in step S16 to be described later.

If NO in step S11 (no new transit route is found), the flow advances to step S13 to check in turn if a change in transit means is permitted. Note that the change in transit means is to transit to the scheduled location using a transit means other than the vehicle V, and when the user selects and executes a transit means change icon (not shown) displayed on the remark field C4 in the schedule on the PIM mode screen shown in Fig. 4, it is determined that the change is permitted.

If NO in step S13 (not permitted), the flow advances to step S16 to report to the user that he or she may be behind schedule using the voice call or mail message as in the above case.

If YES in step S13 (the change in transit means is permitted), a new transit means which has the allowable time period t = 15 min or more is searched for in step S14, and it is checked in step S15 if the transit means can be changed to the new one. If NO in step S15 (the transit means cannot be changed), the flow advances to step S16 to report to the user that he or she may be behind schedule.

If YES in step S15 (the transit means can be changed), the flow advances to step S17 to report to the user that the new transit means has been selected, and to store a route using that transit means. After that, the flow advances to step S20.

It is checked in step S18 if the vehicle V has started. If NO in step S18, the flow returns. If YES in step S18, i.e., if the vehicle V has started, the flow advances to step S19 to display the current position of the vehicle V on the map in the PIM mode screen on the display 7 and to start navigation of the transit route to the next scheduled location of the vehicle V. After that, an automatic check subroutine is executed in step S20 to inform the PC 20 via the server 3 of the information center MC that the user has finished one of schedule items and the PIM data has been updated or the transit route of the vehicle V or the transit means has been changed. After that, update of the PIM data is confirmed in step S21, and the flow then returns to step S1.

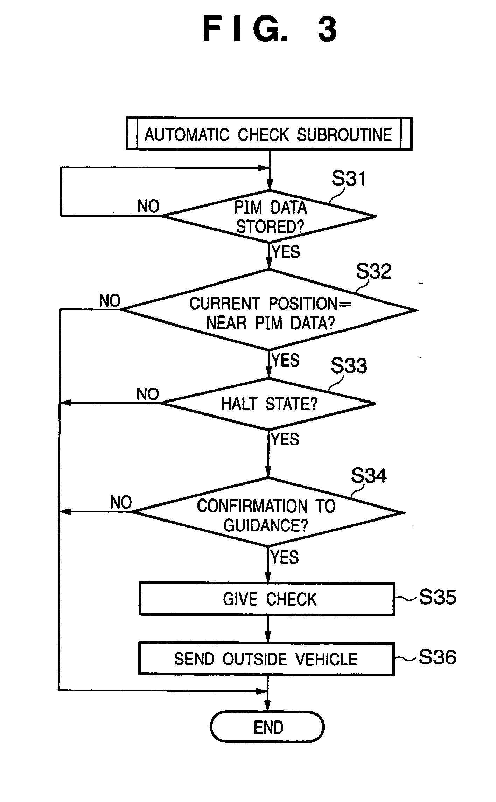

The signal process for automatically checking execution of the PIM data in the automatic check subroutine in step S20 will be explained below using Fig. 3.

It is checked in the first step S31 if the PIM data is stored in the RAM 17 of the navigation apparatus 1. If NO in step S31, step S31 is repeated; if YES in step S31, the flow advances to step S32 to check if the current position of the vehicle V is near position data in the stored PIM data, and the current time falls within an identical time band in the PIM data.

If NO in step S32, the flow ends; if YES in step S32, it is checked if the vehicle V is in a halt state (the mobile body is at a halt for a predetermined period of time).

If YES in step S32 (halt state), it can be determined that the user has left the vehicle V to take care of business such as a meeting set in the PIM data, and the vehicle V is in a halt state. The flow then advances to step S34 to check if the user has made confirmation operation for a guidance in association with PIM data of the business that correspond to the current halt state in the PIM data. Confirmation of the guidance is made by prompting the user to make confirm operation by displaying a menu screen on the display 7.

If NO in step S34 (no guidance confirmation), this subroutine ends; if YES in step S34, i.e., guidance confirmation is detected, the flow advances to step S35 to check the end of the schedule of the business which is set in the PIM data and corresponds to the current halt state. In step S36, transit state data of the vehicle V, which is associated with time data, is sent to the PC 20 outside the vehicle V via the information center MC, thus ending the subroutine. Upon receiving the transit state data and time data from the navigation apparatus 1, the PC 20 automatically updates the stored PIM data.

In this example, by the processes in steps S4 to S21 shown in Figs. 1 and 2, the navigation apparatus 1 receives traffic information from the traffic information center TC outside the vehicle V and navigates the transit route of the user by the vehicle V on the basis of the PIM data set and stored in the PC 20 (setting means) in association with the position data.

By the processes in steps S7, S8, and S16, the navigation apparatus 1 sets a predetermined allowable time period t on the basis of the time and position data set by the PC 20 and traffic information, checks if the user can arrive at the scheduled location in the PIM data by the vehicle V on schedule with the allowable time period t, and sends a predetermined report to the user by a voice call or mail message if it is determined that the user may be behind schedule.

By the processes in steps S9 to S15 and S17, if it is determined that the user cannot arrive at the scheduled location by the vehicle V on schedule, the navigation apparatus 1 changes a transit route of the vehicle V to another one or sets another transit state by changing the vehicle V to another transit means.

Furthermore, by the processes in steps S5 and S6, the navigation apparatus 1 receives and updates traffic information from the traffic information center TC at predetermined time intervals.

By the processes in steps S32, S35, and S36 shown in Fig. 3, the navigation apparatus 1 navigates the transit route of the user by the vehicle V, and sends transit state data which is associated with time data to the PC 20 via the information center MC. The PC 20 automatically updates the original PIM data on the basis of the transit state data and time data sent from the navigation apparatus 1 on the vehicle V side.

By the processes in steps S31, S33, and S34, the navigation apparatus 1 receives PIM data from the PC 20, and confirms if update recording of corresponding PIM data is made in the halt state of the vehicle V (confirmation to the guidance).

The effects of this example will be explained below. The PC 20 receives and stores PIM data including position data and associated time data, and this PIM data is input from the PC 20 to the RAM 17 of the navigation apparatus 1 of the vehicle V via the information center MC.

If the control mode of the navigation apparatus 1 is the PIM mode, the PIM mode screen is displayed on the display 7, and traffic information is received from the traffic information center TC at predetermined time intervals (e.g., 10 min) and is updated. The margin time period t2 is added to the scheduled time period t1 in the schedule of the set PIM data, and the transit time period t3 computed based on the traffic information is subtracted from the sum, thus computing the allowable time period t. If the allowable time period t is, e.g., 15 min or more, since a sufficiently long time period is left until the user arrives at the scheduled time upon transiting from the current position to the scheduled location, the map and the current position of the vehicle V are displayed on the PIM mode screen of the display 7 after the vehicle V has started, and navigation of the transit route to the next scheduled location of the vehicle V starts.

At this time, since traffic information is received from the traffic information center TC at predetermined time intervals and is updated, the latest traffic information is input periodically, and navigation control according to the PIM data can be accurately made.

When the user selects and executes the screen switching icon E1 displayed on the screen of the display 7 using the operation switches 9, the screen of the display 7 is switched from the navigation mode screen or television mode screen to the PIM mode screen, PIM data associated with the current navigation control is selected and the user is informed of it. For this reason, the user can easily recognize PIM data associated with the current navigation control by only simple switch operation, thus improving the convenience.

By contrast, when the allowable time t is shorter than 15 min, since the user may not have an enough time period to arrive at the scheduled location at the scheduled time if the user transits from the current position to the scheduled location in accordance with the current transit schedule, and the user may be behind schedule, it is checked if rerouting is permitted. If rerouting is permitted, a new transit route which has the allowable time period t = 15 min or more is searched for, and if such route is found, the initial transit route is changed to that new transit route, and navigation of the transit route to the next scheduled location of the vehicle V starts based on the changed transit route.

If a new transit route which has the allowable time period t = 15 min or more is not found as a result of search, it is checked in turn if a change in transit means is permitted. If a change in transit means is permitted, the change to the new transit means is reported to the user.

Furthermore, if neither rerouting nor a change in transit means are permitted, and if a new transit means that can assure the allowable time period t = 15 min or more is not found, it is reported to the user by a voice call or mail message that he or she may be behind schedule upon transiting to the next scheduled location according to the current transit schedule.

In this way, it is checked based on the time data and position data in the PIM data and the traffic information if the user can arrive at the scheduled location by the vehicle V on schedule with the allowable time period t = 15 min or more, and if it is determined that the user cannot arrive in time even by changing to another transit route or transit means, that message is sent to the user. Hence, the user can know in advance that he or she may not arrive at the scheduled location on schedule with the allowable time period t, and can easily take a measure.

Since the allowable time period t is computed by adding the margin time period t2 to the scheduled time period t1 in the schedule of the set PIM data, and subtracting the transit time period t3 based on the traffic information from the sum, the allowable time period t is set upon determining if the user can arrive at the scheduled location on schedule, and the user can afford to take a measure accordingly if he or she cannot arrive at the scheduled position in time.

Furthermore, since the report to the user is made using a voice call or mail message, the user can select a voice call or mail message according to situation, thus improving the convenience.

If it is determined that the user cannot arrive at the scheduled location corresponding to the PIM data by the vehicle V with the allowable time period t, another transit pattern which uses another transit route of the vehicle V or another transit means is selected and set, and if it is still determined that the user cannot arrive in time, a report is sent to the user. Hence, the vehicle V is more likely to arrive at the scheduled location on schedule using another transit pattern, thus improving the convenience by that choice.

After that, information indicating that the user has finished one of schedule items and the PIM data has been updated or the transit route of the vehicle V or the transit means has been changed is sent to the PC 20 via the server of the information center MC. More specifically, when the current position of the vehicle V is near position data in the PIM data, and the current time falls within an identical time band in the PIM data, i.e., the vehicle V is in a halt state, and when the user has made confirmation operation in response to a guidance of PIM data of a business that corresponds to the halt state of the PIM data, the end of the schedule of the business that corresponds to the halt state in the PIM data is checked, and transit state data of the vehicle V is sent to the PC 20 outside the vehicle V via the information center MC in association with time data. Upon receiving the transit state data and time data from the navigation apparatus 1, the PC 20 automatically updates the stored PIM data.

Therefore, in this example, since the navigation apparatus 1 navigates the transit route of the user by the vehicle V on the basis of the traffic information input from an apparatus outside the vehicle V, and the PIM data set and stored in the PC 20 in association with the position data of the PIM data, the transit route of the user by the vehicle V can be appropriately navigated in accordance with the position data of the PIM data, thus improving the convenience.

Since the PIM data is input, set, and stored in the PC 20 outside the vehicle V, and is sent to the navigation apparatus 1 on the vehicle V side via the information center MC, it need not be input and set on the vehicle V side, and the navigation apparatus 1 need only be equipped, thus simplifying the arrangement in the vehicle V.

Since the transit state data of the user by the vehicle V is sent from the onboard navigation apparatus 1 to the PC 20 in association with time data, and the PC 20 automatically updates the PIM data on the basis of the received transit state data of the user and time data, the PC 20 can appropriately update the PIM data as needed in correspondence with the actual transit state of the use, thus improving the convenience.

At that time, it is confirmed if the corresponding PIM data is updated and stored, after the vehicle V comes to a halt, and only when that execution is confirmed, the PIM data is updated and stored. Hence, only required data of the PIM data can be selectively updated, thus improving the convenience.

### <Modification of First Example>

In the first example, the PIM data set by the PC 20 outside the vehicle V is sent to the navigation apparatus 1 of the vehicle V via the information center MC, and the navigation apparatus 1 executes navigation control in accordance with the PIM data. Also, the navigation apparatus 1 returns transit state data of the user navigated by the apparatus 1 to the PC 20, which updates the PIM data. However, the present invention is not limited to such specific system arrangement. For example, a setting means for inputting, setting, and storing PIM data may be provided to the vehicle V in combination with the navigation apparatus 1. In this case, the position data of the PIM data can be input using map information of the navigation apparatus 1.

In the above example, both the navigation apparatus 1 and PC 20 store the PIM program. Alternatively, the navigation apparatus 1 may not store any PIM program to simply serve as a server.

Furthermore, a navigation program may also be stored in the PC 20, which inputs and sets the user's transit route, and the transit route data set by the PC 20 may be sent to the navigation apparatus 1 of the vehicle V together with the PIM data. With this system arrangement, since the onboard navigation apparatus 1 need not have a function of setting the transit route of the user by the vehicle V, and need only have a function of navigating the vehicle V along the transit route, the onboard navigation apparatus 1 can be simplified.

When the transit state data of the vehicle V is sent from the navigation apparatus 1 to the PC 20 outside the vehicle V via the information center MC in association with time data to update the PIM data as in the above example, it is asked if there is another scheduled item, which is to visit the current scheduled location again where the vehicle V is at a halt (it may be determined as a result of a meeting after the current transit), after the transit state data is sent. If such schedule is found, the apparatus 1 prompts the user to input the date and time of the next scheduled visit, and may send the scheduled location and scheduled date and time as PIM data to the PC outside the vehicle. In this case, PIM data associated with the next schedule can be easily set.

In the above example, the user transits by using the vehicle V. However, the present invention can be applied to a case wherein the user transits using a taxicab, bus, train, or the like other than the vehicle V. Furthermore, the present invention can be applied to a case wherein the user transits while carrying a portable phone with a navigation function, or a case wherein PIM data is used to manage the services of taxicabs, buses, and the like.

### [Second Example]

The second example based on the aforementioned first example will be described below. In this example, an information management method of, e.g., a meeting schedule and the like, which can be suitably applied to the aforementioned information processing system, will be described.

In the following description, a repetitive description of the same arrangement as in the first example will be omitted, and characteristic features of this example will be mainly explained. This example will exemplify an arrangement in which information management of PIM (Personal Information Manager) data in the information terminal 50 is made by the database 58 in the self-terminal for the sake of simplicity.

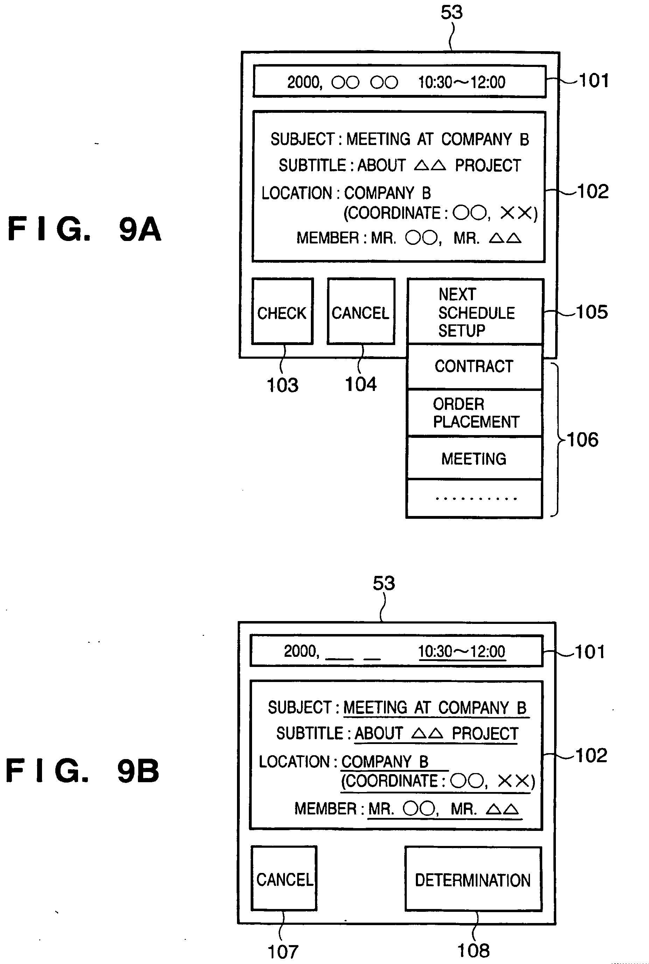

Characteristic features of this example will be described first with reference to Figs. 9A and 9B. Upon making information management of PIM data using the information terminal 50 which comprises the GPS receiver 52 for detecting the current position, the information terminal 50 displays a schedule input screen exemplified in Fig. 9A. This schedule input screen has a schedule (date, time) input area 101, and schedule information input area 102. PIM data input by the user on these input areas is stored in the database 58 of the self terminal in association with position data detected by the GPS receiver 52, and the current time (time data including a date).

When the user starts up the information terminal 50 upon completion of a given event such as a meeting or the like, the information terminal 50 searches PIM data stored in the database 58 in accordance with the position data detected by the GPS receiver 52 at that time. With this search, the information terminal 50 acquires PIM data, to which that position data or position data corresponding to a position within a predetermined range around a position indicated by the position data is associated, from a plurality of records, and displays the contents of the acquired PIM data on the display 53 as a sample of new PIM data to be stored in the database 58 so as to allow the user to change the setups of desired items, as exemplified in, e.g., Fig. 9B. At this time, records to be searched may be limited to a predetermined time range since it is not practical to report too old information to the user.

When the user completes input operations and selects a determination button 108 on this display screen, the information contents displayed on that display screen are stored in the database 58 of the information terminal 50 as a new record of PIM data while being associated with position data detected by the GPS receiver 52 at that time, and the current time. On the other hand, when the user operates a cancel button 107, all the information contents automatically displayed as a sample are cleared to allow the user to set a quite new record.

The control process that implements the aforementioned operation of the information terminal 50 will be described below.

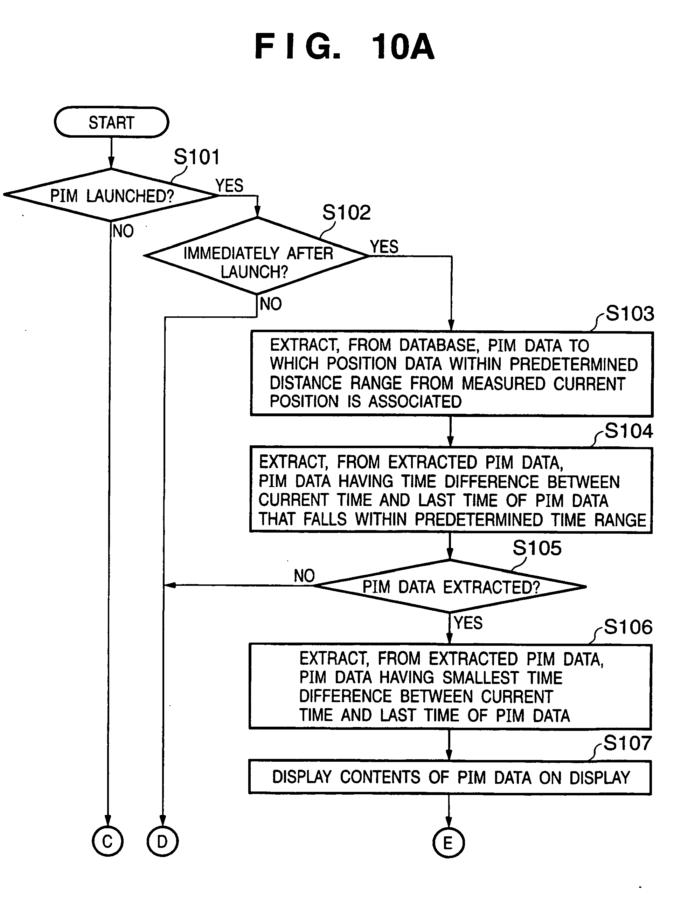

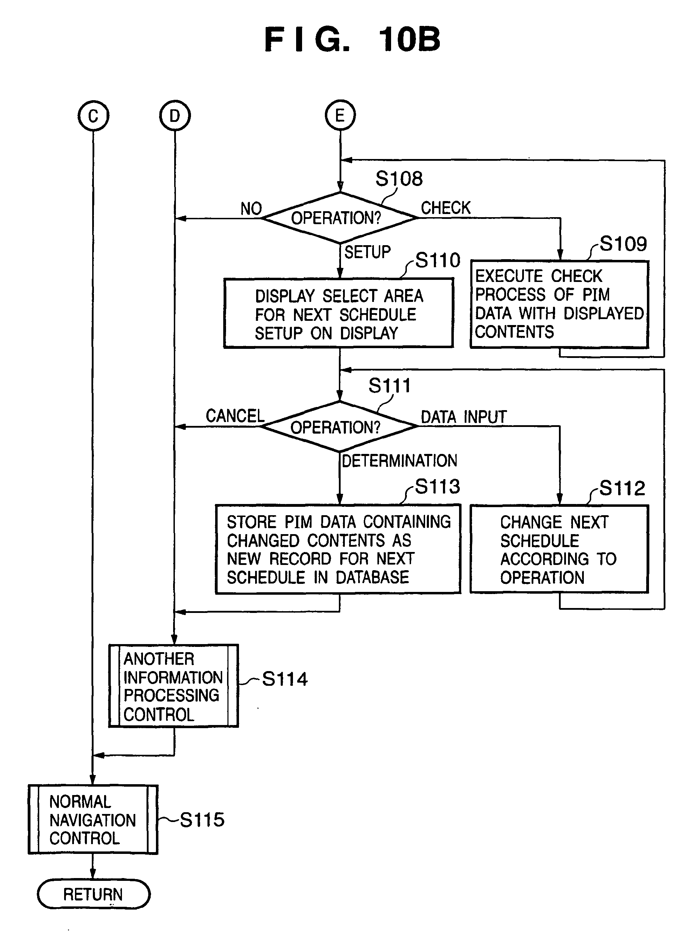

Figs. 10A and 10B are flow charts showing the control process of the information terminal 50 in the second example, i.e., the processing sequence to be executed by the CPU 51 of the information terminal 50.

Steps S101 and S102 (Fig. 10A): It is checked if the user has turned on a main switch of the operation switches 54 of the information terminal 50 (step S101). If NO in step S101 (OFF), the flow advances to step S115; if YES in step S101 (ON), it is checked if the information terminal has just been started up, i.e., if the current control period is the first one since the above decision result among control periods after startup (step S102). If YES in step S102, the flow advances to step S103; otherwise, the flow advances to step S114.

Step S103: PIM data stored in the database 58 are searched in accordance with the position data currently detected by the GPS receiver 52 to extract PIM data, to which that position data or position data corresponding to a position within a predetermined range around a position indicated by the position data is associated, from a plurality of records.

Step S104: From the PIM data extracted in step S103, PIM data which have time intervals between the time data associated with these data and the current time that fall within a predetermined time range are extracted.

Step S105: It is checked if PIM data are extracted in step S104. If YES in step S105 (PIM data are extracted), the flow advances to step S106; if NO in step S105 (PIM data are not extracted), the flow advances to step S114.

Step S106: Since the presence of at least one PIM data (one record) is confirmed in step S105, PIM data which has a smallest time difference between time data associated with these PIM data and the current time, is extracted from the extracted PIM data (step S106), and the contents of the extracted PIM data are displayed on the display, as exemplified in, e.g., Fig. 9A (step S107).

At this time, a select area 106 displays selectable items "contract", "order placement", "meeting", and the like (Fig. 9A shows these selectable item examples below the actual display screen for the sake of simplicity).

For example, when the user selects "contract" on the select area 106, a screen that allows the user to input various items to be determined upon contract is displayed, and information input by the user on that screen can be sent to a predetermined data server of an office or the like. In this case, software is preferably programmed to inhibit information from being sent to the database 58 before the user inputs all minimum required items for the contract.

On the other hand, when the user selects "order placement" on the select area 106, a screen that allows the user to input merchandise (including a service) to be ordered, quantity, unit price, and the like is displayed, and information input by the user on that screen can be sent to a predetermined data server of an office or the like that actually prepares for merchandise.

Note that more practical expansion to an order placement job of articles briefly explained in this example will be explained in detail later in the third example.

Step S108: It is checked if the user has made switch operation. If the user has operated a check button 103 on the display screen exemplified in Fig. 9A, the flow advances to step S109; if the user has operated a cancel button 104, the flow advances to step S114; if the user has operated a next schedule setup button 105, the flow advances to step S110.

Step S109: Since the user has operated the check button 103, the currently displayed contents of the PIM data are updated as an old record (i.e., a processed record which is excluded from schedule items to be executed by the user in future) inside the database 58, and the flow returns to step S108.

Step S110: The currently displayed contents of the PIM data are displayed on the display as a sample of new PIM data to be stored in the database 58 so as to allow the user to change the setups of desired items, as exemplified in, e.g., Fig. 9B.

Step S111: It is checked if the user has made switch operation. If the user has operated the cancel button 107 on the display screen exemplified in Fig. 9B, the flow advances to step S114; if the user has operated the determination button 108, the flow advances to step S113; if the user has made switch operation that updates the displayed contents, the flow advances to step S112.

Step S112: Information contents according to input operation are stored in the RAM, and the flow returns to step S111.

Step S113: The PIM data which is temporarily stored in the RAM 56 and contains changed contents is stored in the database 58 as a new record of PIM data associated with the next scheduled event together with position data detected by the GPS at the current startup timing of the information terminal 50, and the current time.

Step S114: Another control process (e.g., e-mail message/document creation, data communication, online or offline information search, or the like) which is currently prevalent in a portable PDA is executed.

Step S115: A normal navigation control process is executed on the basis of position data detected by the GPS receiver at predetermined time periods, a destination set by the user, map information, and the like, and the flow returns to step S101.

According to this example mentioned above, the contents of the PIM data displayed on the screen shown in Fig. 9A are taken over by the display screen shown in Fig. 9B in steps S107 to S109, and these contents can be changed to desired information contents by user's switch operations.

In general, upon completion of a meeting, another event about the same case is normally scheduled like the next meeting. In this example, when the user starts up the information terminal 50 in such situation, PIM data to which position data of nearly the same location is associated is automatically displayed. Therefore, the user can register a new record of PIM data by fewer operations, i.e., by changing only items that must be updated in the displayed contents, thus allowing simple input operations, and improving the convenience.

In this example, information management of PIM data in the portable information terminal 50 has been explained. Alternatively, the aforementioned function may be implemented by the PC 20 by connecting a position measurement sensor to the PC described in the first example or modifying the control process shown in Figs. 10A and 10B so that the user pre-sets coordinate information of the location where the PC 20 is equipped.

### [First Embodiment]

The first embodiment based on the aforementioned second example will be described below. In the following description, a repetitive description of the same arrangement as in the second example will be omitted, and characteristic features of this embodiment will be mainly explained.

In this embodiment, the aforementioned control process of the information terminal 50 is applied to the navigation apparatus 1 mounted on a mobile body such as an automobile or the like. For the sake of simplicity, this embodiment will also explain an arrangement in which information management of PIM (Personal Information Manager) data in the navigation apparatus 1 is made by a memory (e.g., the RAM 17) in the self-apparatus.

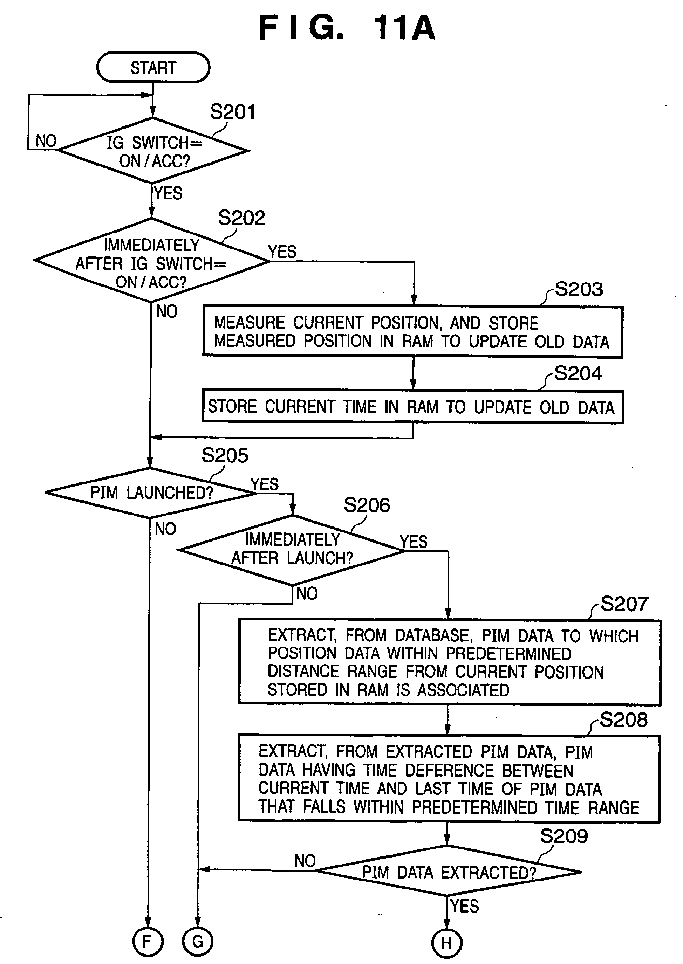

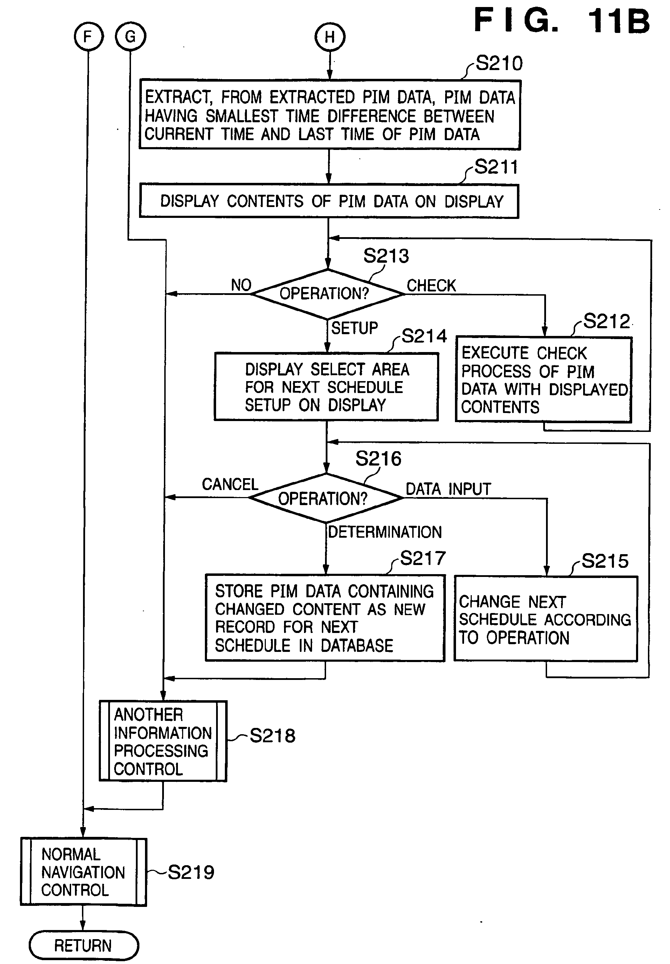

Figs. 11A and 11B are flow charts showing the control process of the navigation apparatus 1 in the first embodiment, i.e., the processing sequence to be executed by the CPU of the navigation apparatus 1.

Steps S201 and S202 (Fig. 11A): If it is detected that the ignition switch 10 is ON (or at a position that allows accessory operation), it is checked if that operation has just been made, i.e., if the current control period is the first one since the above decision result among control periods (step S202).

If YES in step S202, the flow advances to step S203; otherwise, the flow advances to step S205.

Steps S203 and S204: The current position detected using the GPS receiver 3, gyro sensor 6, and the like, and the current time is stored in the RAM 17.

Steps S205 to S219: The same processes as those which have been described in steps S101 to S115 in Figs. 10A and 10B are executed, and the flow returns to step S201.

According to this embodiment mentioned above, since the navigation apparatus 1 is mounted on an automobile, PIM data cannot be processed at the meeting unlike the information terminal 50 that the user can carry. However, since the PIM data associated with the current position or its neighboring position is automatically displayed as in the second example at the time when the user turns on the ignition switch 10, the user can enjoy the same effects as those explained in the second example, thus improving the convenience.

### <Modifications of Second Example and First Embodiment>

In the second example and first embodiment mentioned above, PIM data (arbitrary information such as a meeting schedule and the like) is stored/managed in the self-apparatus. However, the present invention is not limited to such specific apparatus arrangement, and storage/management itself of PIM data may be implemented in collaboration with the external server 30 described in detail in the first example. That is, steps S103 to S113 in Figs. 10A and 10B, and steps S207 to S217 in Figs. 11A and 11B may be executed between the navigation apparatus 1 or information terminal 50, and the server 30 using two-way communications via an electric communication line.

As an example of the operation of the server 30 in this case, PIM data, position data, and current time received from the navigation apparatus 1 or information terminal 50 are stored in a database in the server 30 in association with each other, information stored in the database is searched in accordance with position data received in response to startup (or start of movement) of the navigation apparatus 1 or information terminal 50 to acquire PIM data to which that position data or position data corresponding to a position within a predetermined range around a position indicated by that position data is associated, and the acquired PIM data is sent to the navigation apparatus 1 or information terminal 50. Upon searching the database, arbitrary information to which time data dating back the current time a predetermined time period or more is associated is excluded.

When storage/management of PIM data is done using the external server 30, various kinds of information can be shared among users of a plurality of other information terminals that can access the server 30, and the job efficiency can be improved by so-called knowledge management.

In the second example and first embodiment mentioned above, the user is informed of PIM data by means of display on the display. However, the present invention is not limited to such specific form, and a system that uses an audible message together with the visible information, or uses an audible message may be realized.

According to the first to second examples and first embodiment mentioned above, user's input operations upon executing information management using an information processing apparatus can be simplified.

That is, when new arbitrary information (e.g., a given event and time information associated with that event) is to be input, already registered contents of another arbitrary information associated with that arbitrary information are automatically informed on, e.g., a display using the position information of the current position as a key. For example, upon completion of a meeting, another event about the same case is normally scheduled like the next meeting.
According to the present invention, in such situation (at the meeting or in a vehicle parked near the scheduled location), arbitrary information to which position information of nearly the same location is associated is automatically informed. Hence, the user can register new arbitrary information by fewer operations, i.e., by changing only items that must be updated from the informed contents, thus improving the convenience.

Since arbitrary information, to which time information dating back the current time a predetermined period of time or more is associated, is less useful upon storing new arbitrary information even if it has position information of the current position, only recent ones (e.g., up to those one month before) which are relatively more useful can be acquired without acquiring such information.

Also, a switching timing of arbitrary information to which position information of the current position or its neighboring position is associated from a future event to an old event can be adjusted to a desired timing, e.g., a timing at which the user who finished the meeting begins to transit to another place.

### [Third Example]

An example of the order placement job of articles based on a PIM data compatible navigation apparatus, which has been briefly explained above in the second example ,will be described in detail below.

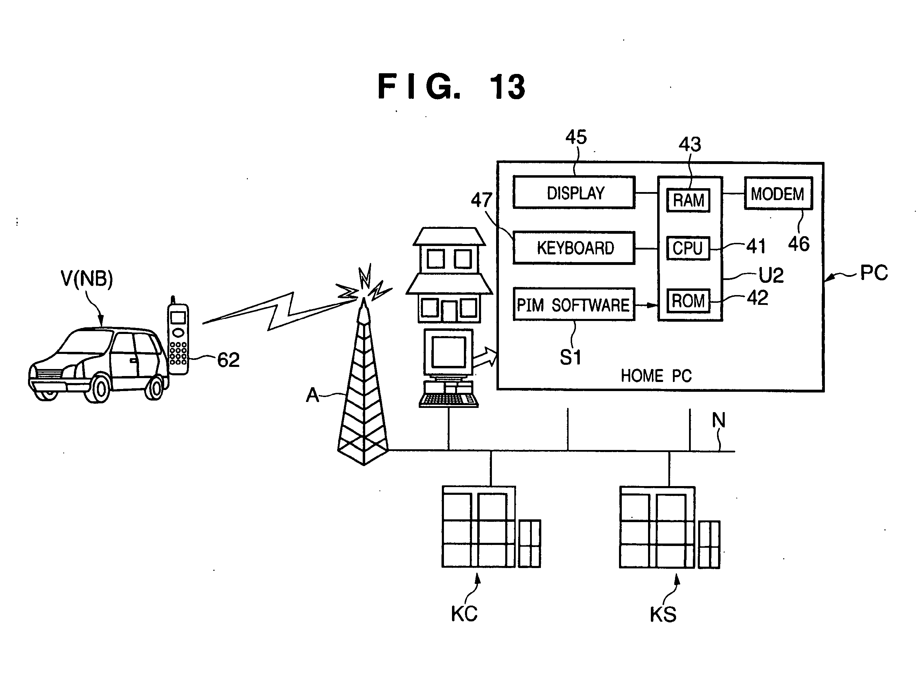

Referring to Fig. 13, reference symbol V denotes a vehicle as a mobile body, which has a navigation apparatus, and a radio communication means. Reference symbol N denotes a network such as the Internet or the like. To this network N, a management apparatus KS equipped in a company for which a driver of the vehicle V works, a personal computer PC equipped in the driver's home, and a traffic information center KC that delivers traffic information are connected.

An outline of the overall flow of various kinds of information in Fig. 13 will be explained below. The driver of the vehicle V sets, i.e., creates his or her personal schedule data (to be also referred to as "PIM" or "PIM data" hereinafter; PIM = Personal Information Manager) in advance using the personal computer PC, as will be described later, and the set personal schedule data is stored in a storage means of the management apparatus KS via the network N.

The management apparatus KS sends personal schedule data, and other kinds of information to the vehicle V via the network N and a radio antenna A. The traffic information center KC sends traffic related information such as traffic control, traffic jam, and the like to the vehicle V via the network N and antenna A. The vehicle V sends its current position and information that can specify merchandise, services or the like, an order for which is received at the visiting place (to be referred to as an object on order) to the management apparatus KS via the antenna A and network N.

The management apparatus KS also has a function of an order placement apparatus HS that makes an order placement job of the received object on order to a third-party company, and this function is implemented when an order placement process module as software for making an order placement job in the management apparatus KS as a host computer is executed.

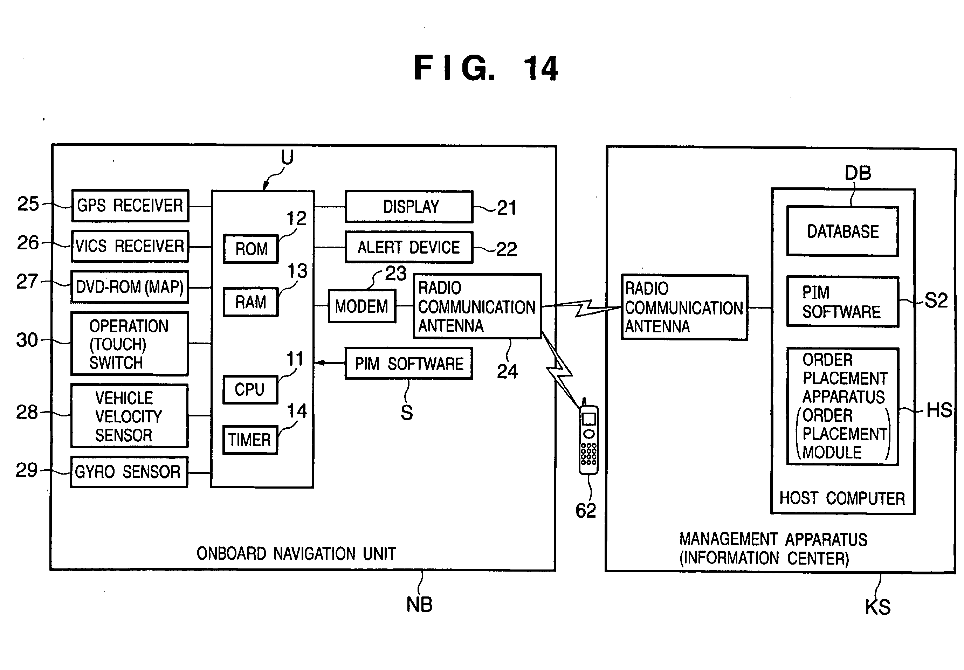

Fig. 14 shows a control system of a navigation apparatus NB equipped in the vehicle V. Reference symbol U denotes a controller constructed using a microcomputer. The controller U has a CPU 11, ROM 12, RAM 13, and timer 14. The CPU 11 controls the overall apparatus, and the RAM 12 stores a basic program and the like required for the control by the CPU 11. The RAM 13 temporarily stores data. The timer 14 is used in the control by the CPU 11, and to set, e.g., the current time.

Various devices and sensors are connected to the controller U. In Fig. 14, reference numeral 21 denotes a display which is used to display a road map itself, to make display for route navigation on the road map, to display personal schedule data, to make display upon inputting the object on order, and so forth. Reference numeral 22 denotes an alert device which operates to inform using, e.g., a voice output that a schedule falls behind and so forth. Reference numeral 23
denotes a modem for a radio communication means; and 24, an antenna for a radio communication.

Reference numeral 25 denotes a GPS sensor for receiving a signal from an artificial satellite for position information, and detecting the current position of the vehicle V. Reference numeral 26 denotes a VICS receiver for receiving traffic information, position information, and the like from transmitters equipped near a road. Reference numeral 27 denotes a DVD-ROM which stores map information for route navigation. Reference numeral 28 denotes a vehicle velocity sensor; and 29, a gyro sensor, which sensors are used in auxiliary position detection when the GPS sensor 25 cannot detect the position.

Reference numeral 30 denotes operation switches used to issue manual instructions to the controller U. The operation switches 30 have character keys, a 10-key pad, a joystick, and the like, and are used as input means for making various selections, switching of control modes, and the like, and for inputting the object on order. Reference symbol S denotes software which implements control using PIM (personal schedule data), and is installed in the controller U. Note that software corresponding to the PIM software S is also installed in the management apparatus KS and personal computer PC.

Referring to Fig. 13, a controller U2 in the personal computer PC has a CPU 41, ROM 42, and RAM 43, as is well known, and a display 45, modem 46, and keyboard 47 are connected to the controller U2. Of course, software S1 (corresponding to the software S) for making control associated with personal schedule data is installed in the controller U2. Note that the personal schedule data is input using the keyboard 47.

The management apparatus KS has a server function, constructs a storage means DB for storing personal schedule data as a database, and a control means for making control associated with personal schedule data, and also has a function of the order placement apparatus HS for receiving and storing the object on order, as shown in Fig. 14. Of course, software S2 (corresponding to the software programs S and S1) for making control associated with personal schedule data is installed in the management apparatus KS. Note that the order placement apparatus HS can be equipped at a place different from the management apparatus KS.

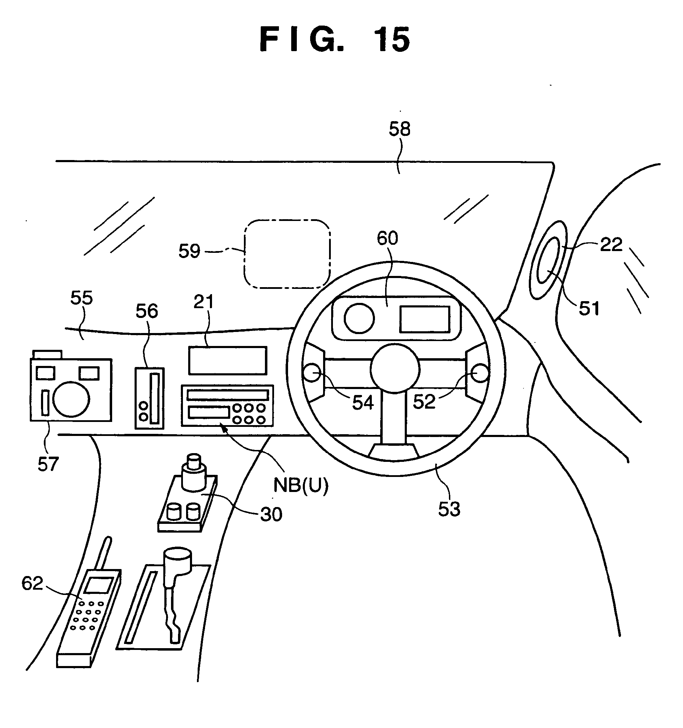

Fig. 15 shows the arrangement around the driver's seat of the vehicle in which the aforementioned navigation apparatus NB is equipped. In Fig. 15, reference numeral 51 denotes a microphone which integrally incorporates the aforementioned alert device 22, and is used for hand-free voice conversation and voice input. Reference numeral 52 denotes a display switching switch provided to a steering wheel 53; and 54, a switch for the microphone 51, which is provided to the steering wheel 53. Furthermore, a DVD-RAM (DVD-RAM drive) 56 is arranged near the navigation apparatus NB on an instrument panel 55, and a digital camera 57 can be connected to the instrument panel 55.

In this example, the DVD-RAM 56 can store the travel history computed by the navigation apparatus NB and image data of the digital camera 57, which are associated with position information (coordinate information) contained in the travel history in a recording medium loaded therein. When the user plays back the contents of such recording medium using a home-use player or the like (or the DVD-RAM 56), he or she can enjoy, for example, travel records (navigation album).

In this example, since the road map, vehicle velocity indication, and the like are projected by a hologram onto a front windshield 58, as indicated by the one-dashed chain line and reference numeral 59 (protected portion) in Fig. 15, the driver can receive, e.g., route navigation while she or she keeps looking forward for driving.

In Fig. 15, the display 21 is independently provided to the instrument panel 51. Alternatively, the display 21 may be independently built in a meter panel 60 or the meter panel 60 may be allowed to switch its display, and may serve as the display 21. In Figs. 13 to 15, reference numeral 62 denotes a portable phone. Communications between the navigation apparatus NB, and the management apparatus KS, traffic information center KC, or personal computer PC may be made via the portable phone 62.

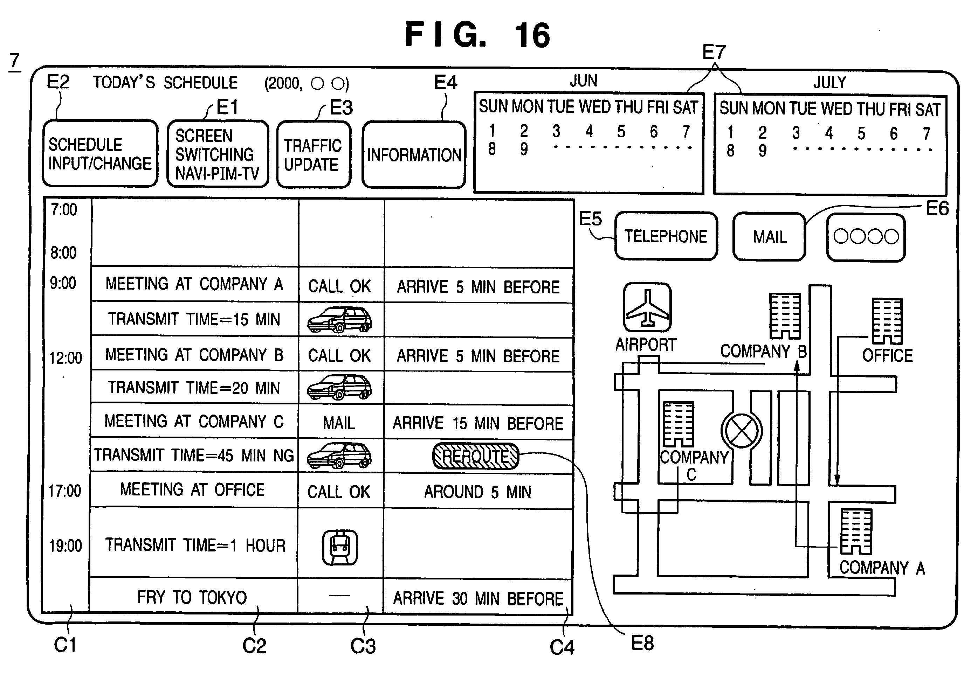

Fig. 16 shows an example of PIM data (personal schedule data). In Fig. 16, a time field C1, schedule item field C2, transit means field C3, and remark field C4 are displayed as a today's schedule in the PIM data. For example, transit time periods t3 are displayed on the scheduled item field C2 in addition to schedule items, a notification mode (to be described later) is displayed on the transit means field C3 in addition to transit means, and arrival times at scheduled locations and the like are displayed on the remark field C4.

Also, a navigation map associated with the schedule is displayed on the lower right area of the screen shown in Fig. 16. Furthermore, a schedule input/change icon E2, a traffic update icon E3 used to update traffic information by forcibly receiving it from the traffic information center TC, a display icon E4 used to display various kinds of information, a telephone icon E5 used to make a phone call, a mail icon E6 used to send/receive mail messages, and calendar icons E7 are displayed in addition to a screen switching icon E1. When the user has made switch operation for selecting and executing the traffic update icon E3, the navigation apparatus NB forcibly receives traffic information from the traffic information center KC, thereby automatically updating the traffic information.

In the aforementioned schedule, assume that after the user leaves home for his or her office, he or she visits companies A, B, and C in turn using the vehicle V to have meetings, goes back from company C to the office, then goes to an airport by train, and travels to Tokyo by airplane.

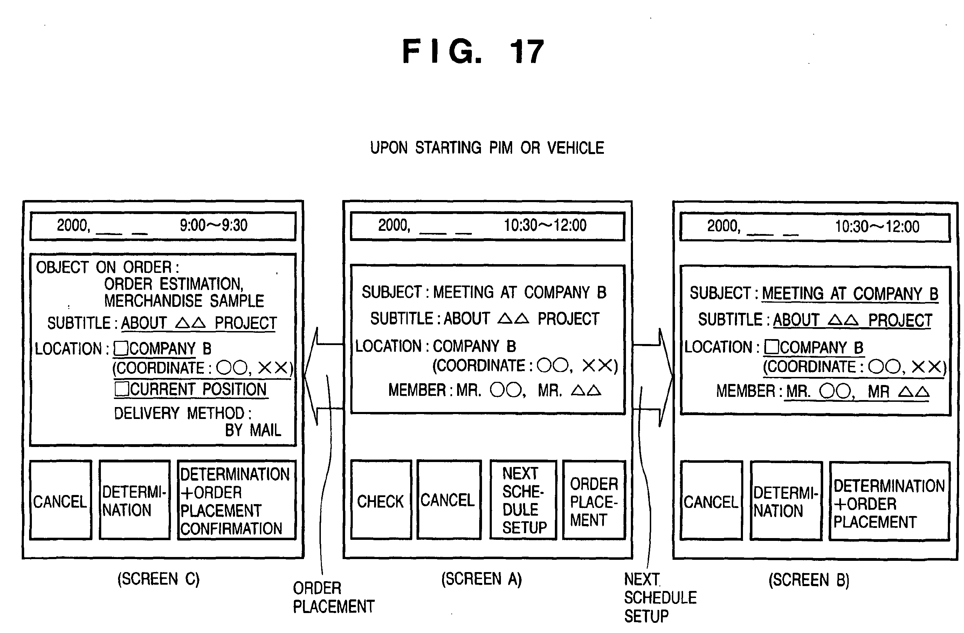

Fig. 17 shows display examples displayed on the display 21 of the vehicle V upon executing control using personal schedule data.

Screen A in Fig. 17 is displayed upon startup, and displays personal schedule data sent from the management apparatus KS. Displayed contents include "year, month, day", "scheduled time", "title", "subtitle", "location", and "members' names", and also icons "check", "cancel", "next schedule setup", and "order placement". The driver of the vehicle V confirms the next visiting location or the like by observing this screen A.

When the user has made switch operation for selecting and executing "check" on screen A, the next schedule is displayed (the displayed items are the same as those on screen A). When the user has made switch operation for selecting and executing "cancel" on screen A, display of screen A is cleared and is switched to road map display.

Screen B in Fig. 17 shows the displayed contents when the user has made switch operation for selecting and executing "next schedule setup" on screen A. Displayed items on screen B in Fig. 17 are substantially the same as those on screen A, except that icons are changed to "cancel", "determination", and "determination + order placement". When the user has made switch operation for selecting and executing "determination" on screen B, the displayed contents are sent to and stored in the management apparatus KS.
When the user has made switch operation for selecting and executing "determination + order placement", the displayed contents are sent to and stored in the management apparatus KS, and display is switched to screen C shown in Fig. 17. When the user has made switch operation for selecting and executing "cancel", display is switched to road map display.

Screen C in Fig. 17 shows displayed contents when the user has made switch operation for selecting and executing "order placement" on screen A or "determination + order placement" on screen B.

The displayed contents on screen C include "delivery year, month, day", "delivery time", "object on order", "subtitle", "company" as a location and "current position" detected by the GPS sensor 25", and "delivery method", and also icons "cancel", "determination", and "determination + order placement confirmation".

On screen C, the delivery time (scheduled delivery time) can be set as time data upon inputting the object on order. That is, on screen C shown in Fig. 17, "9 : 00 to 9 : 30" is the delivery time, and the time upon making order placement operation on screen A or B is automatically set as a default value of the delivery time. Therefore, a sales person need only correct and input the delivery time only if it is required.

The reason why the delivery time is automatically set is that input operation of the sales person is more likely to be omitted if the same time band as that of the current meeting is automatically set as a default value of the delivery time, and the convenience can be improved. Note that a display area for setting a date and time of delivery of the object on order is blank since they must be input according to the terms and the like agreed at the meeting.

Since screens A and B are those when the user re-displays for confirming contents after order placement operation, the time display areas on these screens A and B indicate "10 : 30 to 12 : 00", which is later than the delivery time "9 : 00 to 9 : 30" set on screen C.

Also, the delivery place can be set as the current position detected by the GPS sensor 25 or the current position associated by personal schedule data (especially when the object on order is input near the visiting place).

That is, the navigation apparatus NB can send position information (coordinate information) to the management apparatus KS together with the set object on order. In this example, the current position information or position information corresponding to the schedule is automatically set in this position information item as a default value upon, e.g., order placement operation of the object on order by a sales person. Therefore, the sales person need only correct and input position information only if it is required. In a preferred example, position information is preferably corrected by inputting an address or telephone number.

The reason why the position information is automatically set is that input operation of the sales person is more likely to be omitted if the position information (current position information) of the place where the current meeting is held is automatically set as a default value of the delivery place, thus improving the convenience.

When the user has made switch operation for selecting and executing "cancel" on screen C, display is switched to road map display. When the user has made switch operation for selecting and executing "determination", the displayed contents on screen C are stored in the vehicle V (RAM 13). When the user has made switch operation for selecting and executing "determination + order placement", the displayed contents on screen C are stored in the vehicle V, and at least the object on order is sent to and stored in the management apparatus KS (in this case, the order placement apparatus HS in the management apparatus KS) together with the current position of the vehicle V. The management apparatus KS sends (returns) the received object on order and the like to the vehicle V for the purpose of confirmation.

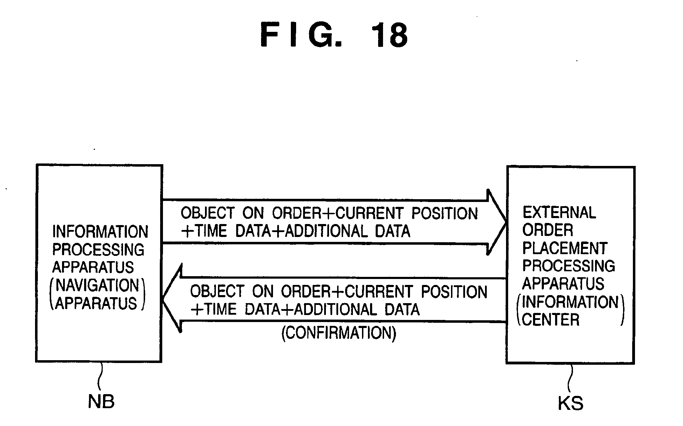

Fig. 18 shows items as contents to be preferably sent to the management apparatus KS together with the object on order. That is, the items to be sent preferably include the current position (the current position detected by the GPS sensor 25, or the current position computed using the detection results of the vehicle velocity sensor 28 and gyro sensor 29), time data at which the data were sent, and additional data such as a subtitle and the like, in addition to the object on order, and all displayed items except for icons on screen C may be sent.

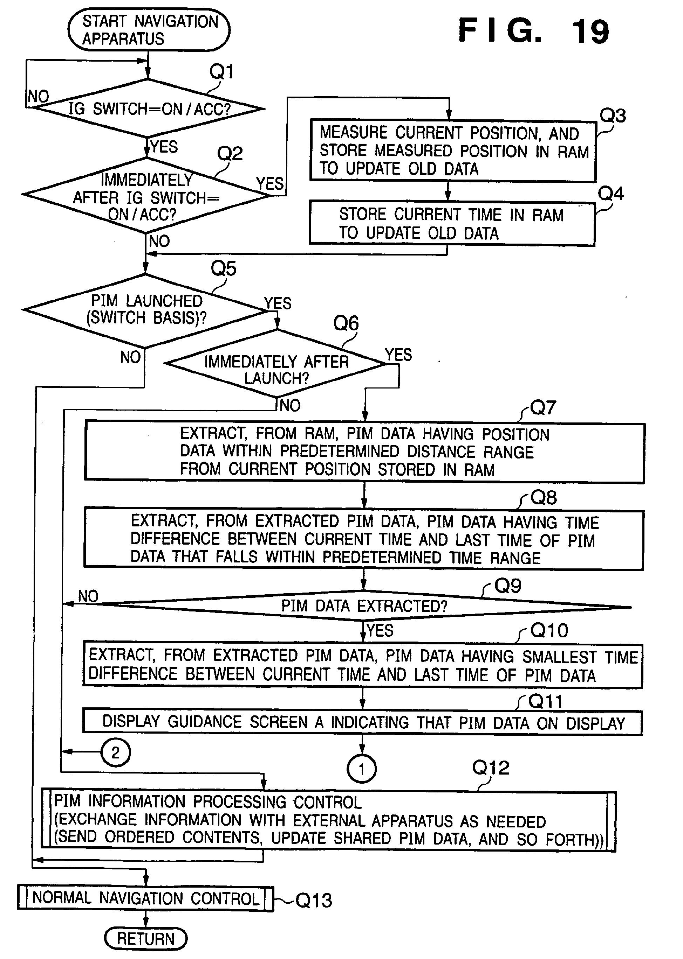

A control example using personal schedule data will be explained below with reference to the flow charts shown in Figs. 19 to 24. In the following description, Q, R, and J respectively indicate processing steps.

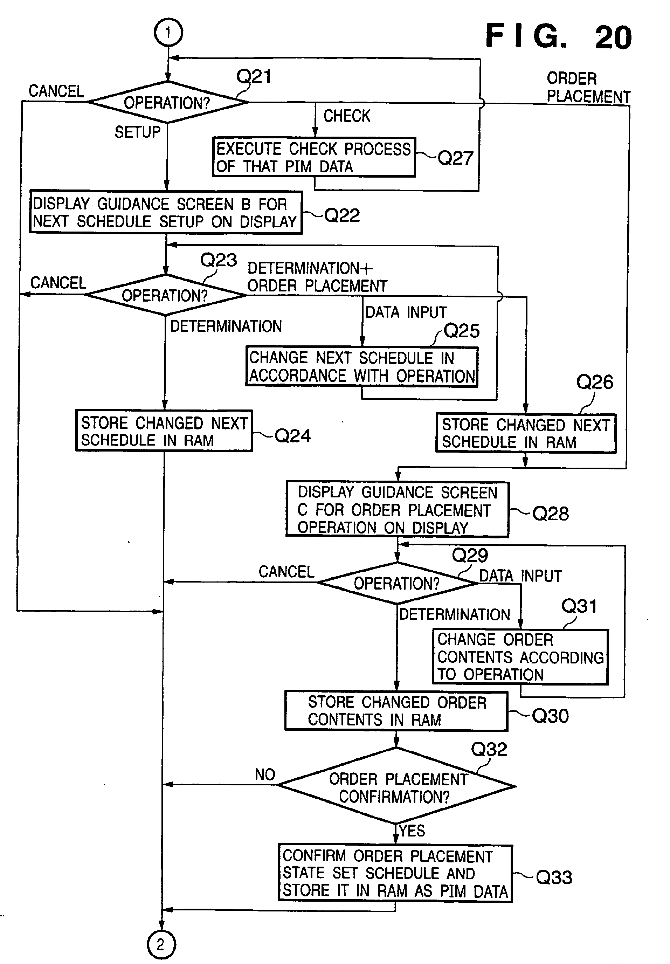

Figs. 19 and 20 show a control example when the navigation apparatus NB sends the object on order and current position to the management apparatus KS.

If it is confirmed in Q1 in Fig. 19 that an ignition (IG) key switch is at an ON or accessory position, it is checked in Q2 if the current control period is the first one executed since the user has turned the IG switch to the ON or accessory position. If YES in Q2, the current position is measured by the GPS sensor 25 or the like and is stored in the RAM 13 in Q3. After that, the current time is stored to update the old data in the RAM 13 in Q4.

After Q4 or if NO in Q2, it is checked in Q5 if a switch for launching PIM of the operation switches 30 is turned on. If YES in Q5, it is checked in Q6 if the PIM has just been launched. If YES in Q6, PIM data having position data within a predetermined distance range from the current position stored in the RAM 13 are extracted from the RAM 13 in Q7. After that, PIM data which have time differences between the current time and their last times that fall within a predetermined time range are extracted from the extracted data in Q8.

After Q8, it is checked in Q9 if the PIM data are extracted. If YES in Q9, PIM data having the smallest time difference between the current time and its last time is extracted from the extracted PIM data in Q10. After that, the extracted PIM data is displayed on the display 21 like screen A in Fig. 17 in Q11.

After Q11, the flow advances to Q21 in Fig. 20. The operation state of an icon on screen A is checked in Q21. If "check" is detected in Q21, the PIM data undergoes a check process in Q27, and the flow returns to Q21. If "setup" is detected in Q21, screen B in Fig. 17 is displayed to set the next schedule in Q22.

After Q22, the operation state of an icon or the like on screen B is checked in Q23. If it is
determined in Q23 that "data input is in progress", the next schedule is changed in Q25, and the flow returns to Q23. If "determination" is detected in Q23, the changed next schedule is stored in the RAM 13 in Q24. If "determination + order placement" is detected in Q23, the next schedule is stored in the RAM 13 in Q26.

If "order placement" is detected in Q21, or after Q26, the flow advances to Q28. In Q28, screen C in Fig. 17 is displayed on the display 21. In Q29, the operation state of an icon or the like on screen C is checked. If it is determined in Q29 that "data input
is in progress", data is changed in Q31, and the flow returns to Q29. If "determination" or "determination + order placement confirmation" is detected in Q29, the displayed order placement contents are stored in the RAM 13 in Q30.

After Q30, it is checked in Q32 if the user has operated "determination + order placement confirmation". If YES in Q32, a schedule of order placement state confirmation is set, and is stored as PIM data in the RAM 13 in Q33.

After Q24, if "cancel" is detected in Q21, if "cancel" is detected in Q23, if "cancel" is detected in Q29, or if NO in Q32, the flow advances to Q12 in Fig. 19. If NO in Q6 in Fig. 19, or if NO in Q9, the flow advances to step Q12.

In Q12, a process of PIM information corresponding to a process executed so far is executed. That is, if data is stored in at least one processing step of Q24, Q25, Q30, and Q33, the stored data is sent to the management apparatus KS. The contents to be sent have three different patterns, i.e., "personal schedule data alone", "object on order alone", and "personal schedule data + object on order". After Q12 or if NO in Q5, normal navigation control (to be described later) is executed in step Q13.

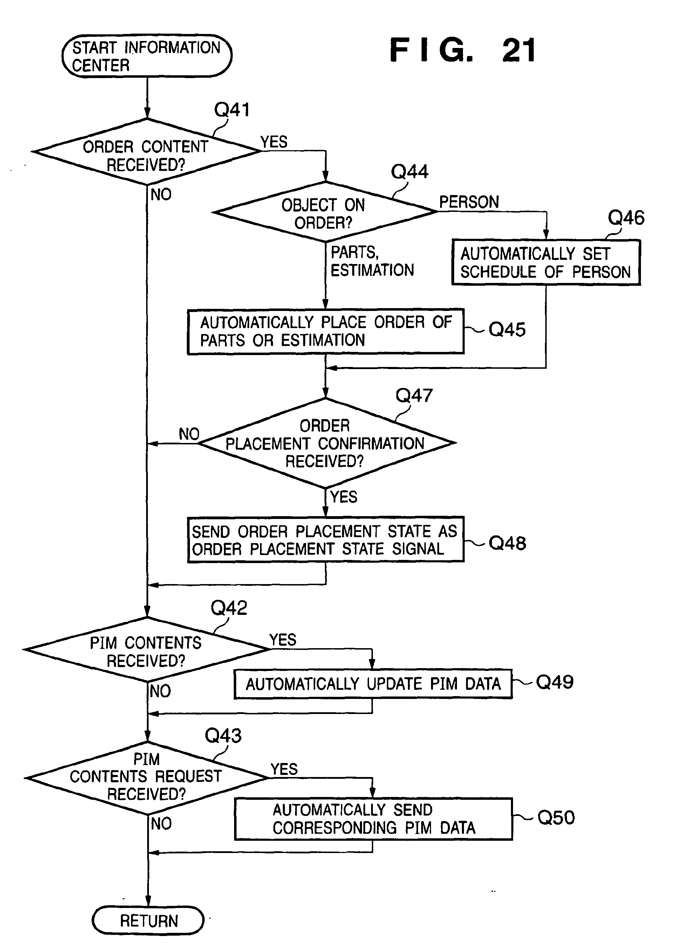

Fig. 21 shows the control in the management apparatus KS corresponding to the control shown in Figs. 19 and 20. It is checked in Q41 in Fig. 21 if an object on order is received. If NO in Q41, it is checked in Q42 if the changed contents of personal schedule data are received. If NO in Q42, it is checked in Q43 if a send request for personal schedule data is received. If NO in Q43, the flow returns to Q1.

If YES in Q41, the type of object on order is checked. If "article or estimation" is detected in Q44, an article or estimation is automatically ordered in Q45. If "person" is detected in Q44, a schedule of a person corresponding to the object on order is automatically set in Q46.

After Q45 or Q46, it is checked in Q47 if an order placement confirmation signal is received from the navigation apparatus NB. If NO in step Q47, the flow advances to Q42; if YES in Q47, the order placement state is sent as an order placement state signal to the navigation apparatus NB in Q48.

If YES in Q42, PIM data is automatically updated in accordance with the change in schedule in Q49, and the flow advances to Q43. If YES in Q43, the corresponding PIM data is sent to the navigation apparatus NB in Q50.

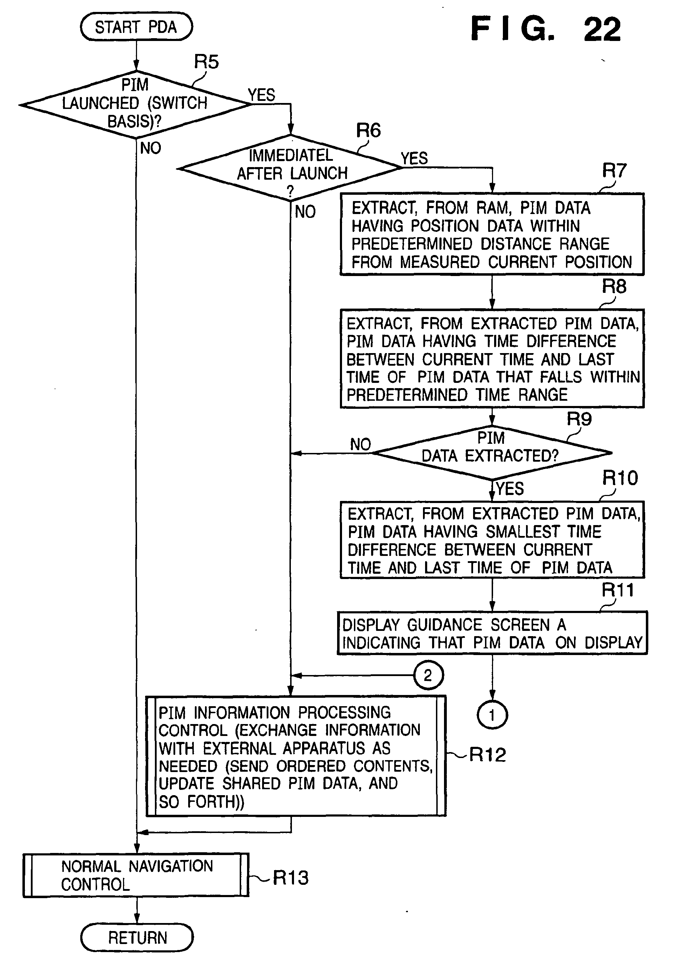

Fig. 22 shows substantially the same control as in the navigation apparatus NB using a general PDA (Personal Digital Assistant) as a portable information processing apparatus in place of the control of the navigation apparatus NB. Note that a position detection means such as a GPS sensor, and a radio communication means are incorporated in or externally connected to the PDA, so that the PDA can execute route navigation on a road map.

Fig. 22 is substantially the same as Fig. 19 except that it does not include the processes in Q1 to Q4, since the PDA is not related to the IG switch. More specifically, R5 to R11 in Fig. 22 correspond to Q5 to Q11 in Fig. 19, and R12 and R13 correspond to Q12 and Q13 in Fig. 19. Note that the control after R11 is the same as that in Fig. 20.

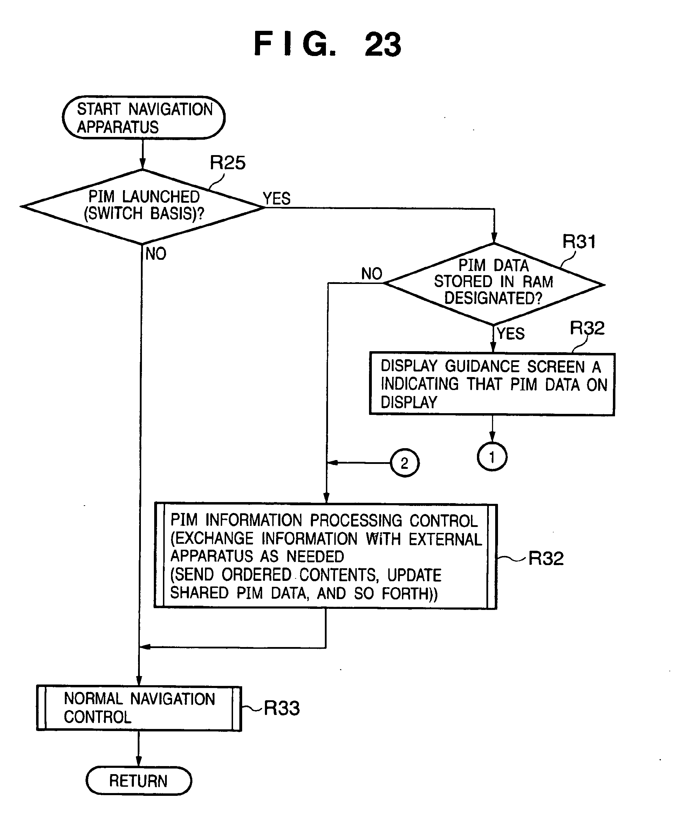

Fig. 23 shows a simpler control example using the PDA, and is premised on that PIM data from the navigation apparatus NB mounted on the vehicle V is stored in advance in the RAM of the PDA. If it is confirmed in R25 in Fig. 23 that the PDA has been started up, it is checked in R31 if PIM data stored in the RAM of the PDA is designated. If YES in R31, screen A in Fig. 17 is displayed in R32, and the control shown in Fig. 20 is then executed. If NO in R31, the flow advances to R32. Note that R32 and R33 correspond to Q12 and Q13 in Fig. 19.

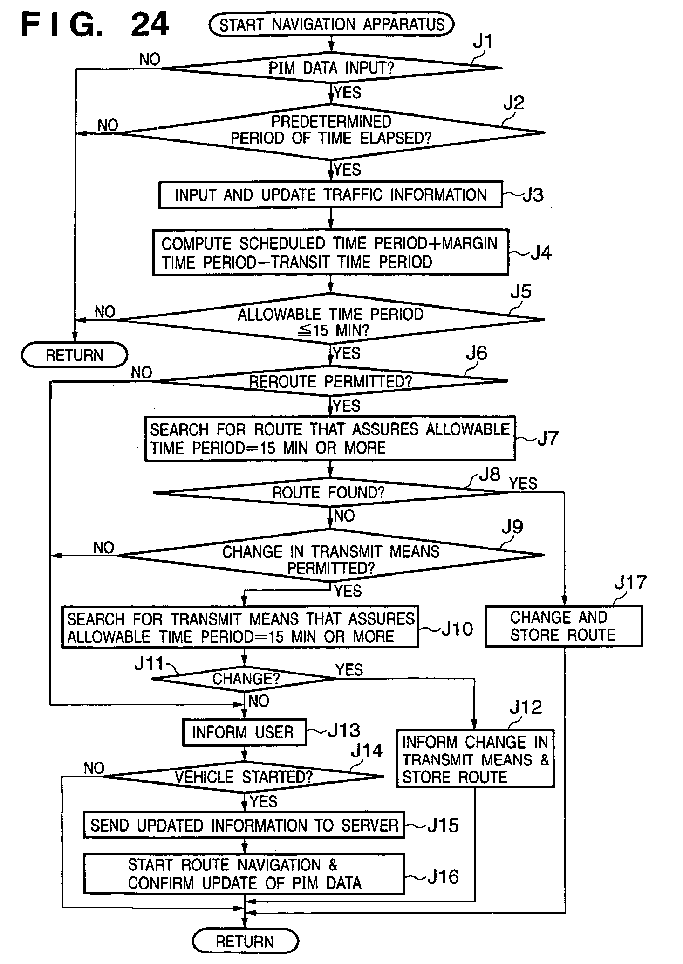

Fig. 24 shows a control example in which route navigation is appropriately done using traffic information while the degree of completion of the schedule is checked, so that actions based on personal schedule data are reliably made, i.e., the schedule can be prevented from falling behind. The control process shown in Fig. 24 is always executed as long as the navigation apparatus NB receives power supply from a battery. Also, in case of the portable information processing apparatus (PDA) shown in Fig. 22 or 23, the control process is always executed as long as the main power switch is ON.

It is checked in J1 in Fig. 24 if PIM data is input from the management apparatus KS. If YES in J1, it is checked J1 if a predetermined period of time has elapsed. If YES in J2, traffic information is updated to the latest one in J3. After that, an allowable time period with respect to the scheduled arrival time at the visiting place based on the PIM data is computed in J4. The allowable time period is computed based on a transit time period (varied according to traffic jam or the like) required for transit in consideration of a traffic jam or the like based on traffic information, the scheduled arrival time, and a minimum required margin time period (e.g., a predetermined value of 5 min or the like).

It is checked in J5 if the computed allowable time period is equal to or shorter than, e.g., 15 min. If NO in J5, i.e., if the allowable time period is longer than 15 min, it is determined that the user can arrive well before the scheduled arrival time, and the flow returns.

If YES in J5, a time allowance is not sufficiently large, and it is checked in J6 if a route to the scheduled visiting place is allowed to be changed. If YES in J6, a route that can assure an allowable time period of 15 min or more is searched for in J7. It is checked in J8 if a route that can assure an allowable time period of 15 min or more is found. If YES in J8, route navigation is executed using the changed route in J17.

If NO in J8, it is checked in J9 if a transit means can be changed, e.g., if a change in transit means from the vehicle V to a bus, train, or the like is permitted. If YES in J9, another transit means that can assure an allowable time period of 15 min or more is searched for in J10. It is checked based on the search result in J11 if the transit means that can assure an allowable time period of 15 min or more is found. If YES in J11, the user is informed of the new transit means, and its transit route is stored in J12.

If NO in J11, the user is informed in J13 that there is no means that can assure an allowable time period of 15 min or more. After that, it is checked in J14 if the vehicle V has started. If YES in J14, it is confirmed that the user proceeds with transit although the allowable time period is short. At this time, since the user may not make it in time, the current status is sent to the management apparatus KS. In J16, route navigation starts, and PIM is updated and confirmed to consider possibility of tardy.

If NO in J1, if NO in J2, if NO in J5, or if NO in J14, the flow returns to J1. If NO in J6, or if NO in J9, the flow advances to J13.

The third example has been explained.
However, the present invention is not limited to such specific example and, for example, the management apparatus KS and order placement apparatus may be set at different locations. Respective steps (step groups) shown in the flow charts or various members such as sensors, switches, and the like can be expressed by assigning the names of means to generic expressions of the functions.

The functions of respective steps (step groups) shown in the flow charts can also be expressed as functions of function modules set in a control unit (controller) (presence of function modules). Of course, the objects of the present invention are not limited to specified ones, but implicitly include provision of means which are essentially expressed to be preferable or advantageous.

According to the third example, an order received at the visiting place can immediately undergo an order placement process by the order placement apparatus. Since the current position is sent to the order placement apparatus together with the object on order, the order source can be accurately confirmed.

## Claims

1. An information management method using a navigation apparatus (1) to be mounted on a vehicle (v), comprising:
a storage step of storing schedule information, input by a user in an external apparatus (30) or the navigation apparatus (1), in association with position information;
a navigation step (S219) of navigating a transit route to the associated position information;
a step (S203) of detecting a current position of the vehicle (v) by a sensor (3) of the navigation apparatus (1) immediately after an ignition switch (10) of the vehicle (v) is being turned ON or is being turned at a position that allows accessory operation (S202);
an acquisition step (S207) of acquiring, in accordance with said detected current position, the schedule information of which the associated position information is within a predetermined range around said detected current position by searching the information stored in said storage step;
an informing step (S211) of informing a user of contents of the acquired schedule information as a sample of new schedule information to be stored in the external apparatus (30) or the navigation apparatus (1) to allow the user to change a setup of desired items thereof (S215) at the navigation apparatus (1); and
depending on a selection operation (S216) by a user at the navigation apparatus (1), a step of storing (S217) the new schedule information together with said detected current position as the associated position information of the new schedule information.

2. The method according to claim 1, wherein said schedule information further includes scheduled time, and upon storing the schedule information with said detected current position as the associated position information, also storing the current time as time information associated with the schedule information and said acquisition step (S208) does not acquire schedule information for which said associated time information is dating back the current time for a predetermined period.

3. The method according to claim 1 or 2, further comprising:
a saving step (S203) of saving said detected current position, and wherein:
the navigation apparatus (1) has a plurality of control modes including a personal information mode;
said acquisition step (S207), said informing step (S211) and said step of storing (S217) are executed in the personal information mode; and
said acquisition step (S207) acquires, immediately after the personal information mode .is started (S206), the saved current position and in accordance with said saved current position, the schedule information of which the associated position information is within a predetermined range around said saved current position by searching the information stored in said storage step.

4. A navigation apparatus (1) to be mounted on a vehicle (v), comprising:
position detection means (3) for detecting a current position of the vehicle (v); storage means (17) for storing schedule information input by a user in an external apparatus (30) or the navigation apparatus (1), in association with position information;
navigation means (2) for navigating a transit route to the associated position information; acquiring means (2) for controlling said storage means (17) in accordance with a current position detected by said position detection means (3) immediately after an ignition switch (10) of the vehicle (v) is being turned ON or being turned at a position that allows accessory operation to acquire the schedule information of which the associated position information is within a predetermined range around said detected current position by searching the information stored in said storage means (17);
informing means (7) for informing a user of contents of the acquired schedule information as a sample of new schedule information to be stored in said storage means (17) to allow the user to change a set up of desired items thereof at the external apparatus (30) or the navigation apparatus (1); and
storing means (2) for storing, the new schedule information together with said detected current position as the associated position information of the new schedule information depending on a selection operation by a user at the navigation apparatus (1).

5. The apparatus according to claim 4, wherein said schedule information further includes scheduled time, and upon storing the schedule information with said detected current position as the associated position information, also storing the schedule information with the current time as associated time information, and
said acquiring means does not acquire schedule information for which said associated time information is dating back the current time for a predetermined period.

6. The apparatus according to claim 4 or 5, wherein said informing means (7) asks the user if the acquired schedule information is processed as old information, and informs the user of the contents of the acquired schedule information to allow the user to change a set up as new schedule information to be stored in said storage means (17) if the user instructs said apparatus to process the acquired schedule information as old information.

7. The apparatus according to any one of claims 4 to 6, having a plurality of control modes including a personal information mode, wherein:
said detected current position is saved; and
said acquiring means (2) acquires immediately after the personal information mode is started, the saved current position and controlling said storage means (17) in accordance with said saved current position to acquire the schedule information of which the associated position information is within a predetermined range around said saved current position by searching the information stored in said storage means (17).

8. A computer readable storage medium storing computer readable program code which when loaded in a suitable system causes the system to perform operation according to the method of one of the claims 1 to 3.

9. A computer program product comprising computer readable program code which when loaded in a suitable system causes the system to perform operations according to the method of one of the claims 1 to 3.

## Patentansprüche

1. Verfahren für die Verwaltung von Informationen unter Verwendung eines Navigationsgeräts (1), das an einem Fahrzeug (v) montiert werden soll, das umfasst:
einen Speicherschritt zum Speichern von Zeitplan- bzw. Ablaufplaninformationen, die von einem Benutzer in eine externe Vorrichtung (30) oder das Navigationsgerät (1) eingegeben werden, in Verbindung mit Positionsinformationen;
einen Navigationsschritt (S219) zum Navigieren eines Transitwegs zu den verbundenen Positionsinformationen;
einen Schritt (S203) zum Detektieren einer aktuellen Position des Fahrzeugs (v) durch einen Sensor (3) des Navigationsgeräts (1) sofort, nachdem ein Zündschalter (10) des Fahrzeugs (v) eingeschaltet wird oder in eine Position gedreht wird, die den Betrieb von Zubehörteilen erlaubt (S202);
einen Erfassungsschritt (S207), um die Zeitplaninformationen, deren verbundene Positionsinformationen innerhalb eines vorgegebenen Bereichs um die detektierte aktuelle Position herum sind, entsprechend der detektierten aktuellen Position zu erfassen, indem die in dem Speicherschritt gespeicherten Informationen durchsucht werden;
einen Informationsschritt (S211), um einen Benutzer über Inhalte der erfassten Zeitplaninformationen als eine Auswahl neuer Zeitplaninformationen, die in der externen Vorrichtung (30) oder dem Navigationsgerät (1) gespeichert werden sollen, zu informieren, um dem Benutzer zu ermöglichen, einen Aufbau deren gewünschter Objekte an dem Navigationsgerät (1) zu ändern (S215); und
abhängig von einer Auswahlbedienung (S216) durch einen Benutzer an dem Navigationsgerät (1) einen Schritt zum Speichern (S217) der neuen Zeitplaninformationen zusammen mit der detektierten aktuellen Position als die mit den neuen Zeitplaninformationen verbundenen Positionsinformationen.

2. Verfahren nach Anspruch 1, wobei die Zeitplaninformationen ferner die geplante Zeit und nach dem Speichern der Zeitplaninformationen mit der detektierten aktuellen Position als den verbundenen Positionsinformationen auch das Speichern der aktuellen Zeit als mit den Zeitplaninformationen verbundenen Zeitinformationen umfassen und wobei der Erfassungsschritt (S208) keine Zeitplaninformationen erfasst, für welche die verbundenen Zeitinformationen die aktuelle Zeit um eine vorgegebene Zeitspanne zurückdatieren.

3. Verfahren nach Anspruch 1 oder 2, das ferner umfasst:
einen Sicherungsschritt (S203) zum Sichern der detektierten aktuellen Position, und wobei:
das Navigationsgerät (1) eine Vielzahl von Steuerbetriebsarten einschließlich einer persönlichen Informationsbetriebsart hat;
der Erfassungsschritt (S207, der Informationsschritt (S211) und der Speicherschritt (S217) in der persönlichen Informationsbetriebsart ausgeführt werden; und
der Erfassungsschritt (S207) sofort, nachdem die persönliche Informationsbetriebsart gestartet wird (S206), die gesicherte aktuelle Position und entsprechend der gesicherten aktuellen Position die Zeitplaninformationen, deren verbundene Positionsinformationen innerhalb eines vorgegebenen Bereichs um die gesicherte Position herum sind, erfasst, indem die in dem Speicherschritt gespeicherten Informationen durchsucht werden.

4. Navigationsgerät (1), das an einem Fahrzeug (v) montiert werden soll, das umfasst:
Positionsdetektionsmittel (3) zum Detektieren einer aktuellen Position des Fahrzeugs (v);
Speichermittel (17) zum Speichern von Zeitplaninformationen, die von einem Benutzer in eine externe Vorrichtung (30) oder das Navigationsgerät (1) eingegeben werden, in Verbindung mit Positionsinformationen;
Navigationsmittel (2) zum Navigieren eines Transitwegs zu den verbundenen Positionsinformationen;
Erfassungsmittel (2) zum Steuern der Speichermittel (17) entsprechend einer aktuellen Position die von dem Positionsdetektionsmittel (3) detektiert wird, direkt nachdem ein Zündschalter (10) des Fahrzeugs (v) eingeschaltet wird oder in eine Position gedreht wird, die den Betrieb von Zubehörteilen erlaubt, um die Zeitplaninformationen, deren verbundene Positionsinformationen innerhalb eines vorgegebenen Bereichs um die detektierte aktuelle Position herum sind, zu erfassen, indem die in dem Speicherschritt gespeicherten Informationen durchsucht werden;
Informationsmittel (7), um einen Benutzer über Inhalte der erfassten Zeitplaninformationen als eine Auswahl neuer Zeitplaninformationen, die in der dem Speichermittel (17) gespeichert werden sollen, zu informieren, um dem Benutzer zu ermöglichen, einen Aufbau deren gewünschter Objekte (S215) an der externen Vorrichtung (30) oder dem Navigationsgerät (1) zu ändern; und
Speichermittel (2) zum Speichern der neuen Zeitplaninformationen zusammen mit der detektierten aktuellen Position als die mit den neuen Zeitplaninformationen verbundenen Positionsinformationen. abhängig von einer Auswahlbedienung durch einen Benutzer an dem Navigationsgerät (1).

5. Gerät nach Anspruch 4, wobei die Zeitplaninformationen ferner die geplante Zeit und nach dem Speichern der Zeitplaninformationen mit der detektierten aktuellen Position als den verbundenen Positionsinformationen auch das Speichern der aktuellen Zeit als mit den Zeitplaninformationen verbundenen Zeitinformationen umfassen, und
wobei das Erfassungsmittel keine Zeitplaninformationen erfasst, für welche die verbundenen Zeitinformationen die aktuelle Zeit um eine vorgegebene Zeitspanne zurückdatieren.

6. Gerät nach Anspruch 4 oder 5, wobei das Informationsmittel (7) den Benutzer fragt, ob die erfassten Zeitplaninformationen als alter Informationen verarbeitet werden, und den Benutzer über die Inhalte der erfassten Zeitplaninformationen informiert, um dem Benutzer zu ermöglichen, einen Aufbau als neue Zeitplaninformationen, die in das Speichermittel (17) gespeichert werden sollen, zu ändern, wenn der Benutzer das Gerät anweist, die erfassten Zeitplaninformationen als alte Informationen zu verarbeiten.

7. Gerät nach einem der Ansprüche 4 bis 6, das eine Vielzahl von Steuerbetriebsarten einschließlich einer persönlichen Informationsbetriebsart hat, wobei:
die detektierte aktuelle Position gesichert wird; und
das Erfassungsmittel sofort, nachdem die persönliche Informationsbetriebsart gestartet wird, die gesicherte aktuelle Position erfasst, und das Speichermittel (17) entsprechend der gesicherten aktuellen Position gesteuert wird, um die Zeitplaninformationen zu erfassen, deren verbundene Positionsinformationen innerhalb eines vorgegebenen Bereichs um die gesicherte Position herum sind, indem die in dem Speichermittel (17) gespeicherten Informationen durchsucht werden.

8. Computer-lesbares Speichermedium, das Computer-lesbaren Programmcode speichert, der, wenn er in ein passendes System geladen wird, bewirkt, dass das System den Betrieb gemäß dem Verfahren nach einem der Ansprüche 1 bis 3 durchführt.

9. Computerprogrammprodukt, das Computer-lesbaren Programmcode umfasst, der, wenn er in ein passendes System geladen wird, bewirkt, dass das System den Betrieb gemäß dem Verfahren nach einem der Ansprüche 1 bis 3 durchführt.

## Revendications

1. Procédé de gestion des informations qui utilise un appareil de navigation (1) qui doit être monté sur un véhicule (v), comprenant :
une étape de mémorisation consistant à mémoriser une information de planification, une saisie par un utilisateur dans un appareil externe (30) ou dans l'appareil de navigation (1), en association avec une information de position ;
une étape de navigation (S219) consistant à emprunter un parcours de transit vers l'information de position associée ;
une étape de détection (S203) consistant à détecter une position actuelle du véhicule (v) par un capteur (3) de l'appareil de navigation (1) immédiatement après qu'un contacteur d'allumage (10) du véhicule (v) ait été tourné sur « ON » ou qu'il soit en train d'être tourné sur une position qui permet une opération auxiliaire (S202) ;
une étape d'acquisition (S207) consistant à acquérir, en conformité avec ladite position actuelle détectée, l'information de planification pour laquelle l'information de position associée se trouve dans une plage prédéterminée dans un rayon de ladite position actuelle détectée par la recherche de l'information mémorisée dans ladite étape de mémorisation ;
une étape d'information (S211) consistant à informer un utilisateur sur le contenu de l'information de planification acquise en tant qu'un échantillon de la nouvelle information de planification qui doit être mémorisée dans l'appareil externe (30) ou dans l'appareil de navigation (1) afin de permettre à l'utilisateur de modifier un réglage des articles désirés de celui-ci (S215) sur l'appareil de navigation (1) ; et
en dépendance d'une opération de sélection (S216) par un utilisateur sur l'appareil de navigation (1), une étape consistant à mémoriser (S217) la nouvelle information de planification conjointement avec ladite position actuelle détectée en tant que l'information de position associée de la nouvelle information de planification.

2. Procédé conformément à la revendication 1, dans lequel ladite information de planification inclut en outre un temps planifié, et suite à la mémorisation de l'information de planification avec ladite position actuelle détectée en tant que l'information de position associée, aussi la mémorisation de l'heure actuelle en tant qu'une information de temps associée à l'information de planification et dans lequel ladite étape d'acquisition (S208) n'acquière pas l'information de planification pour laquelle ladite information de temps associée est en train de dater en retour l'heure actuelle pour une période prédéterminée.

3. Procédé conformément à l'une ou l'autre des revendications 1 et 2, comprenant en outre :
une étape de sauvegarde (S203) consistant à sauvegarder ladite position actuelle détectée, et dans lequel :
l'appareil de navigation (1) a une pluralité de modes de commande qui incluent un mode personnel d'information ;
ladite étape d'acquisition (S207), ladite étape d'information (S211) et ladite étape de mémorisation (S217) sont exécutées dans le mode personnel d'information ; et
ladite étape d'acquisition (S207) acquière, immédiatement après que le mode personnel d'information soit démarré (S206), la position actuelle sauvegardée et, en conformité avec ladite position actuelle sauvegardée, l'information de planification pour laquelle l'information de position associée se trouve dans une plage prédéterminée dans un rayon de ladite position actuelle sauvegardée par la recherche de l'information mémorisée dans ladite étape de mémorisation.

4. Appareil de navigation (1) qui doit être monté sur un véhicule (v), comprenant :
un moyen de détection de position (3) pour la détection d'une position actuelle du véhicule (v) ;
un moyen de mémorisation (17) pour mémoriser l'information de planification saisie par un utilisateur dans un appareil externe (30) ou dans l'appareil de navigation (1), en association avec une information de position ;
un moyen de navigation (2) pour emprunter un parcours de transit vers l'information de position associée ;
un moyen d'acquisition (2) pour commander ledit moyen de mémorisation (17) en conformité avec une position actuelle détectée par ledit moyen de détection de position (3) immédiatement après qu'un contacteur d'allumage (10) du véhicule (v) ait été tourné sur « ON » ou qu'il soit en train d'être tourné sur une position qui permet une opération auxiliaire pour acquérir l'information de planification pour laquelle l'information de position associée se trouve dans une plage prédéterminée dans un rayon de ladite position actuelle détectée par la recherche de l'information mémorisée dans ledit moyen de mémorisation (17) ;
un moyen d'information (7) pour informer un utilisateur sur le contenu de l'information de planification acquise en tant qu'un échantillon de la nouvelle information de planification qui doit être mémorisée dans ledit moyen de mémorisation (17) afin de permettre à l'utilisateur de modifier un réglage des articles désirés de celui-ci sur l'appareil externe (30) ou sur l'appareil de navigation (1) ; et
un moyen de mémorisation (2) pour la mémorisation de la nouvelle information de planification conjointement avec ladite position actuelle détectée en tant que l'information de position associée de la nouvelle information de planification en dépendance d'une opération de sélection par un utilisateur sur l'appareil de navigation (1).

5. Appareil conformément à la revendication 4, dans lequel ladite information de planification inclut en outre un temps planifié, et suite à la mémorisation de l'information de planification avec ladite position actuelle détectée en tant que l'information de position associée, aussi la mémorisation de l'information de planification avec l'heure actuelle en tant qu'information de temps associée, et ledit moyen d'acquisition n'acquière pas l'information de planification pour laquelle ladite information de temps associée est en train de dater en retour l'heure actuelle pour une période prédéterminée.

6. Appareil conformément à l'une ou l'autre des revendications 4 et 5, dans lequel ledit moyen d'information (7) demande à l'utilisateur si l'information de planification acquise est traitée comme ancienne information, et informe l'utilisateur sur le contenu de l'information de planification acquise afin de permettre à l'utilisateur de modifier un réglage en tant que la nouvelle information de planification qui doit être mémorisée dans ledit moyen de mémorisation (17) si l'utilisateur donne l'instruction audit appareil de traiter l'information de planification acquise comme ancienne information.

7. Appareil conformément à l'une quelconque des revendications 4 à 6, ayant une pluralité de modes de commande qui incluent un mode personnel d'information, dans lequel :
ladite position actuelle détectée est sauvegardée ; et
ledit moyen d'acquisition (2) acquière, immédiatement après que le mode personnel d'information soit démarré, la position actuelle sauvegardée et la commande dudit moyen de mémorisation (17) ;
en conformité avec ladite position actuelle sauvegardée pour acquérir l'information de planification pour laquelle l'information de position associée se trouve dans une plage prédéterminée dans un rayon de ladite position actuelle sauvegardée par la recherche de l'information mémorisée dans ledit moyen de mémorisation (17).

8. Support de mémorisation lisible par un ordinateur sur lequel est mémorisé un code de programme lisible par un ordinateur, qui, lorsqu'il est chargé sur un système approprié, provoque que le système accomplisse une opération conformément au procédé selon l'une des revendications 1 à 3.

9. Produit de programme d'ordinateur comprenant un code de programme lisible par un ordinateur, qui, lorsqu'il est chargé sur un système approprié, provoque que le système accomplisse des opérations conformément au procédé selon l'une des revendications 1 à 3.
